# EUROPÄISCHE PATENTSCHRIFT

(11) **EP 2 670 626 B1**
(45) Veröffentlichungstag und Bekanntmachung des Hinweises auf die Patenterteilung: **04.07.2018**
(21) Anmeldenummer: 12700932.2
(22) Anmeldetag: 18.01.2012
(51) Int. Cl.: B60N 2/30, B60N 2/01, B60N 2/005, B60N 2/24

(54) **VARIABLES LEICHTBAU-SITZKONZEPT**
VARIABLE LIGHTWEIGHT SEAT CONCEPT
CONCEPT DE SIÈGE À STRUCTURE LÉGÈRE, MODULABLE

(30) Priorität: 05.02.2011 DE 102011010387
(43) Veröffentlichungstag der Anmeldung: 11.12.2013
(73) Patentinhaber: Volkswagen Aktiengesellschaft, 38440 Wolfsburg (DE); Sitech Sitztechnik GmbH, 38442 Wolfsburg (DE)
(72) Erfinder: BREYVOGEL, Jörg, 38165 Lehre (DE); ROHLFING, Hans, 38108 Braunschweig (DE); WOYNOWSKI, Tobias, 30165 Hannover (DE); STOLLREITER, Ole, 30539 Hannover (DE); SULOWSKI, Robert, 67-200 Jaczów (PL); SZYDLO, Jaroslaw, 59-101 Polkowice (PL)
(74) Vertreter: Wöhltjen, Karsten
(86) Internationale Anmeldenummer: PCT/EP2012/000197
(87) Internationale Veröffentlichungsnummer: WO 2012/104021

(56) Entgegenhaltungen:
- EP-A2- 0 397 333
- EP-A2- 0 722 855
- DE-A1- 10 036 553
- DE-B- 1 011 744
- DE-B- 1 124 834
- JP-A- 56 071 638
- US-A- 5 769 360
- US-A1- 2010 084 899

## Beschreibung

Die Erfindung betrifft eine Sitzbank, die eine variable Sitzanordnung in einem Fahrzeug ermöglicht.

Aus dem Stand der Technik sind variable Sitzkonzepte mit vorbestimmten Sitzanordnungen bekannt, die eine Reihe von Sitzkombinationen hinsichtlich der Passagierzahl beziehungsweise der Nutzung der Sitze zulassen.

Bei einigen Sitzkonzepten liegt der Schwerpunkt hinsichtlich der Variabilität darin, dass sich die Laderaumverhältnisse flexibel anpassen lassen.

In anderen bekannten Sitzkonzepten liegt der Schwerpunkt darin, dass möglichst viele Personen transportiert werden können. So finden in einem bekannten Sitzkonzept in der Maximalvariante in einem Fahrzeug bis zu acht Passagiere plus Fahrer Platz. Jeweils drei Passagiere auf den beiden Dreier-Reihen der zweiten und dritten Sitzreihe im Fond und zwei Personen auf der optionalen Beifahrer-Doppelsitzbank sowie der Fahrer auf einem Einzelsitz. Die zweite Sitzreihe hinter dem Fahrer beziehungsweise der Beifahrer-Doppelsitzbank oder dem Beifahrer-Einzelsitz besteht beispielsweise aus einer klappbaren Doppelsitzbank mit Lehnenverstellung plus einem Einzelsitz mit "Easy-Entry"-Klappmechanik für einen leichteren seitlichen Einstieg. In Komfortvarianten lassen sich alle Einzel- und Doppelsitze umlegen, falten und herausnehmen.

Bei allen bekannten Sitzkonzepten stehen aus Komfortgründen stets zwei Gesichtspunkte im Mittelpunkt. Zum einen muss gewährleistet sein, dass das Gewicht der Einzel- und/oder Doppelsitze, insbesondere für den Aus- und Einbau oder für das so genannte Wickeln des Fahrzeugsitzes oder das Umlegen der Rückenlehne nicht zu groß ist. In der Praxis sind meist sogar die Einzelsitze bereits so schwer, dass sie nur von kräftigen Personen einbeziehungsweise ausgebaut oder gewickelt werden können. Zum anderen müssen die Entriegelung und Verriegelung der Einzel- und/oder Doppelsitze zu ihrem Aus- und Einbau beziehungsweise zum Wickeln des Fahrzeugsitzes oder zum Umlegen der Rückenlehne leicht erreichbar und betätigbar sein. Der Aus- und Einbau, das Wickeln des Fahrzeugsitzes oder das Umlegen der Rückenlehne sollen dabei schnell durchführbar sein, wobei die karosserieseitige Anbindung der Einzel- und/oder Doppelsitze jedoch so sicher sein muss, dass sie in einem Crashfall sicher bestehen bleibt und darüber hinaus gewährleistet ist, dass die Crashkräfte sicher in die Karosserie des Fahrzeuges abgeleitet werden.

Eine Sitzeinheit mit zwei oder mehr Passagiersitzen, die über Schnellfreigabe-Befestigungseinrichtungen verfügt, mittels denen eine gemeinsame Basisvorrichtung mit einem Passagiersitz oder mehreren Passagiersitzen verbunden werden kann, ist aus der Druckschrift DE 42 39 141 A1 bekannt. Die Passagiersitze der bekannten Lösung sind jedoch hinsichtlich ihres Gewichtes nicht optimal ausgestaltet.

Die Druckschrift DE 1 011 744 B beschreibt eine Sitzanordnung in einem Omnibus nach dem Oberbegriff des Anspruchs 1.

Die Druckschrift JP 56-71638 A beschreibt einen fest am Boden montierten Sitz, an dessen Seite und Bein ein abnehmbarer Sitz befestigt werden kann.

Die Druckschrift DE 1 124 834 B beschreibt einen Stuhl für Fahrzeuge, insbesondere Omnibusse, der fest mit dem Fahrzeugboden verbunden ist und einen Zusatzsitz, der einerseits mit Abstützung am Sitz des fest eingebauten Stuhls befestigt ist und andererseits auf dem Fahrzeugboden steht.

Die Druckschrift US 2010/0084899 A1 beschreibt einen Fahrzeugsitz mit einem klappbaren zweiten Fahrzeugsitz, der in eingeklappter Position in einem Bodenteil des Fahrzeugsitzes verstaut wird, und der in ausgeklappter Position seitlich neben dem Fahrzeugsitz angeordnet ist.

Die Druckschrift US 5,769,360 A beschreibt einen Fahrzeugsitz, der fest mit dem Fahrzeugboden verbunden ist und zur Integration eines Rollstuhls in eine gemeinsame Sitzreihe ausgebildet ist.

Bekannt sind ferner die Druckschriften EP 0 722 855 A2, EP 0 397 333 A2 und DE 100 36 553 A1.

Der Erfindung liegt ausgehend von dem genannten Stand der Technik die Aufgabe zugrunde, ein variables Sitzkonzept bereitzustellen, welches variable Sitzkombinationen zulässt und zudem komfortabel und schnell handhabbar ist.

Ausgangspunkt der Erfindung ist eine Sitzbank für ein Fahrzeug mit den Merkmalen des Oberbegriffs des Anspruchs 1. In bevorzugter Ausgestaltung der Erfindung ist der Basissitz stets der mittlere Sitz und der eine der beiden anderen Sitze ist ein Seitensitz, der links und rechts oder rechts und links des mittleren Basissitzes angeordnet wird.

In bevorzugter Ausgestaltung der Erfindung ist vorgesehen, dass neben dem mittleren Basissitz zur Bildung einer zweisitzigen Sitzbank ein Seitensitz und zur Bildung einer dreisitzigen Sitzbank zwei Seitensitze angeordnet werden, die mit dem mittleren Basissitz schwebend verbunden sind.

Durch die schwebende Anordnung der Seitensitze wird die Aufgabe gelöst, dass eine Veränderung der Sitzanordnung variabel möglich ist, wobei durch die reduzierte Unterkonstruktion vor allem das Gewicht der Seitensitze reduziert wird. Um eine schnelle und komfortable Handhabbarkeit beim Ein- und Ausbau der Seitensitze zu gewährleisten, sind vorteilhafte einfache Befestigungsvarianten zur Verbindung der Seitensitze und mit dem mittleren Basissitz geschaffen worden.

In einer ersten Befestigungsvariante erfolgt die Verbindung zwischen dem Basissitz und dem einen der beiden Seitensitze, indem der Basissitz über mindestens ein Aufnahmeelement verfügt, in dem eine Adapterplatte des einen der beiden Seitensitze befestigbar ist.

In einer zweiten Befestigungsvariante erfolgt die Verbindung zwischen dem Basissitz und dem einen der beiden Seitensitze, indem der Basissitz über eine Gelenkanordnung verfügt, an der mindestens ein Rahmen des einen der beiden Seitensitze befestigbar ist.

In einer dritten vereinfachten Befestigungsvariante wird in einer Basisversion dafür gesorgt, dass die Verbindung zwischen dem Basissitz mit dem einen der beiden Seitensitze dadurch erfolgt, indem zwischen dem Basissitz und dem einen der beiden Seitensitze ein Schraubmodul angeordnet ist.

In bevorzugter Ausgestaltung der Erfindung wird zur Erhöhung der Variabilität die Möglichkeit geschaffen, eine zweisitzige oder eine dreisitzige Sitzbank in eine Wickelstellung zu überführen, wobei die Sitzbänke in vorteilhafter Weise in einer Ausgangsposition über vier Anbindungspunkte mit einem Fahrzeugboden einer Fahrzeugkarosserie verbunden sind und während des Wickelvorganges, der im Beschreibungsteil ausführlich beschrieben wird, nur über zwei Anbindungspunkte mit dem Fahrzeugboden verbunden sind.

In weiterer bevorzugter Ausgestaltung der Erfindung wird zur weiteren Erhöhung der Variabilität die Möglichkeit geschaffen, dass die Seitensitze insbesondere der Sitzbank der zweiten Sitzreihe in eine Easy-Entry-Klappstellung, die im Beschreibungsteil ausführlich beschrieben wird, überführbar sind.

Die Ausgestaltung der Sitzbank und die variablen Möglichkeiten werden kombiniert mit der Idee, dass sowohl die Seitensitze als auch der mittlere Basissitz in einer Leichtbauweise hergestellt werden. Insbesondere die Seitensitze, die in der Praxis öfter ein- und ausgebaut werden, werde nahezu vollständig aus einem Leichtbauwerkstoff hergestellt. Es ist jedoch auch vorgesehen, den Basissitz aus Leichtbauwerkstoff herzustellen, wobei einige Komponenten der Sitzstruktur aus einem Stahlwerkstoff hergestellt werden, um sicherzustellen, dass die Crashkräfte, die bei einem Crash auf den Basissitz und die Seitensitze wirken, aufgenommen werden und in die Fahrzeugkarosserie abgeleitet werden können. Das Leichtbaukonzept wird ebenfalls im Beschreibungsteil detailliert erläutert.

Eine solche Sitzbank wird an einer Fahrzeugkarosserie eines Fahrzeuges angeordnet, bei der der Fahrzeugboden zur Anbindung der Sitzbank mit bis zu drei Sitzplätzen in einer Sitzreihe maximal vier karosserieseitige Anbindungspunkte aufweist, wobei erfindungsgemäß über die Anbindungspunkte gemeinsam mit den Verriegelungseinheiten eines Basissitzes der Sitzbank für die reversible Anbindung der Sitzbank an dem Fahrzeugboden gesorgt ist. Die Sitzanordnung zeichnet sich insbesondere dadurch aus, dass mindestens ein Seitensitz, der an dem mittleren Basissitz angeordnet ist, über dem Fahrzeugboden des Fahrzeuges schwebt.

Werden zwei Sitzbänke (zweisitzig oder dreisitzig) in zwei Sitzreihen angeordnet, weist das Fahrzeug lediglich acht Anbindungspunkte auf.

Verallgemeinernd gilt somit je nach der Anzahl n der Sitzreihen n=1, n=2 für eine erste oder eine erste und eine zweite Sitzreihe, dass die Anzahl der Anbindungspunkte jeweils das Vierfache der Anzahl der Sitzreihen beträgt, wobei eine Sitzreihe mindestens einen Basissitz und einen weiterem Sitz (links oder rechts) oder zwei weitere Sitze (links und rechts) umfasst.

Schließlich wird in einer weiteren Ausgestaltung vorgeschlagen, dass die vier Füße einer Sitzbank einer Sitzreihe über ein Schienensystem, welches vorzugsweise in Längsrichtung des Fahrzeuges am Fahrzeugboden vorgesehen ist, verschiebbar befestigt werden können. Die Anbindungspunkte sind in dieser Ausgestaltung nicht unveränderbar im Fahrzeugboden angeordnet, sondern es ergibt sich in vorteilhafter Weise die Möglichkeit, die Sitzbank flexibel innerhalb des Fahrzeuges relativ zur Karosserie veränderlich, im Fahrzeug weiter vorne oder weiter hinten, in den Schienen des Schienensystems zu verschieben.

Weitere bevorzugte Ausgestaltungen der Erfindung ergeben sich aus den übrigen, in den Unteransprüchen genannten Merkmalen.

Die Erfindung wird nachfolgend anhand der zugehörigen Figuren näher erläutert. Es zeigen:
- Figur 1: einen Schnitt im Bereich eines Fahrzeugbodens einer Fahrzeugkarosserie eines Fahrzeuges in einer Ansicht von oben;
- Figur 2: eine perspektivische Ansicht in einen Innenraum des Fahrzeuges;
- Figur 3-1 bis 3-6: jeweils eine perspektivische Ansicht in den Innenraum des Fahrzeuges zur Darstellung einer Einbaureihenfolge einer dreisitzigen Sitzbank in einer zweiten Sitzreihe;

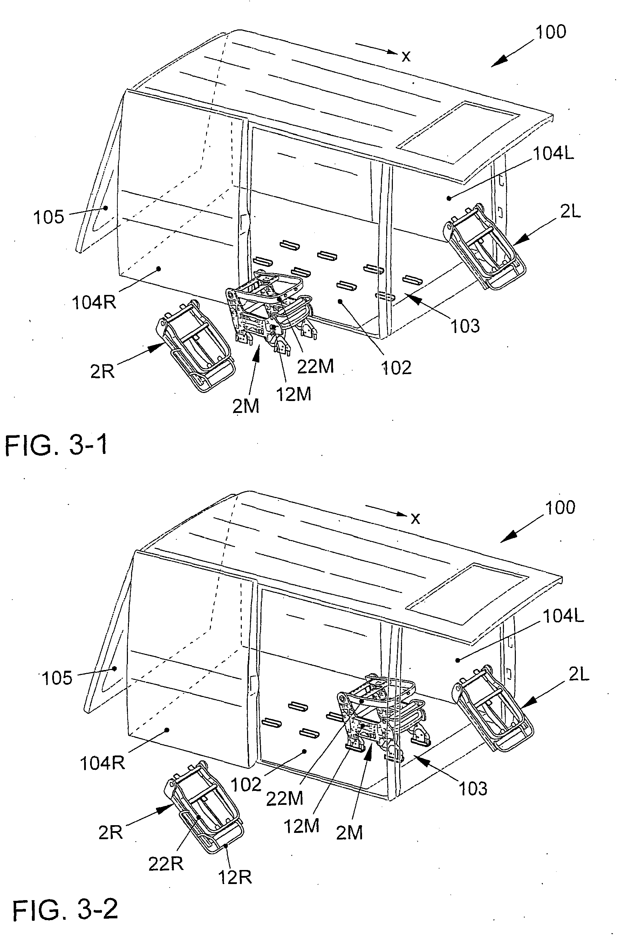

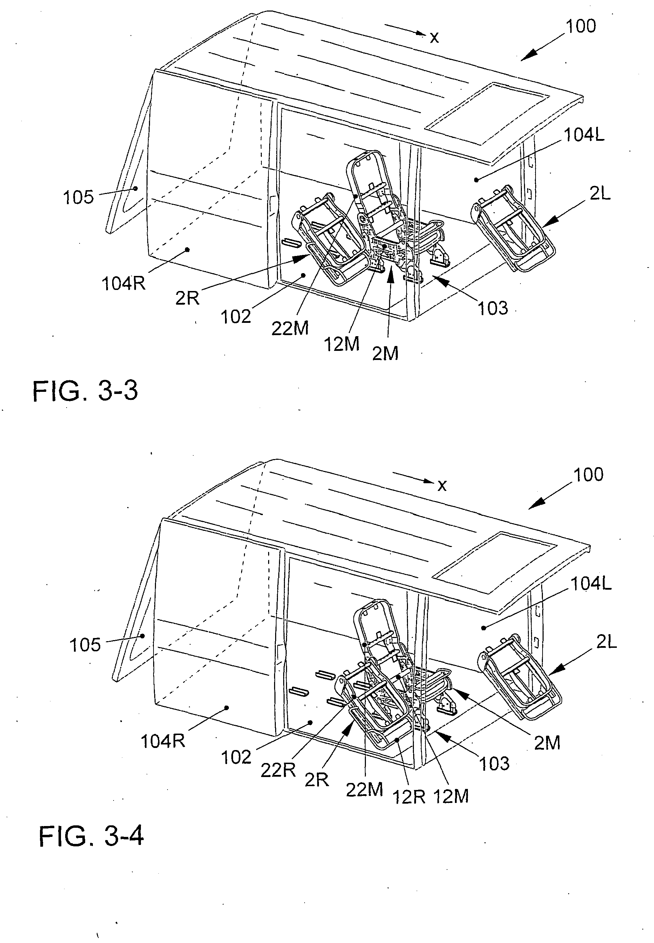

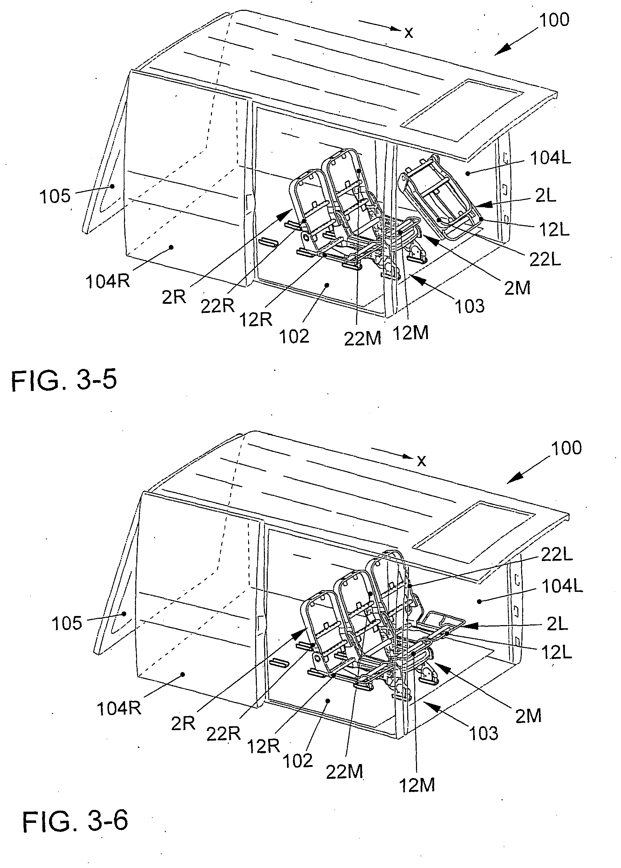

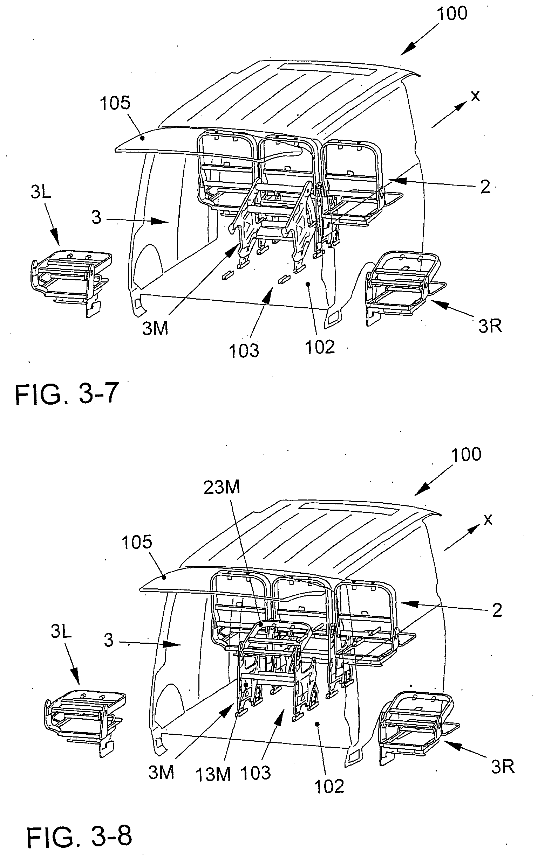

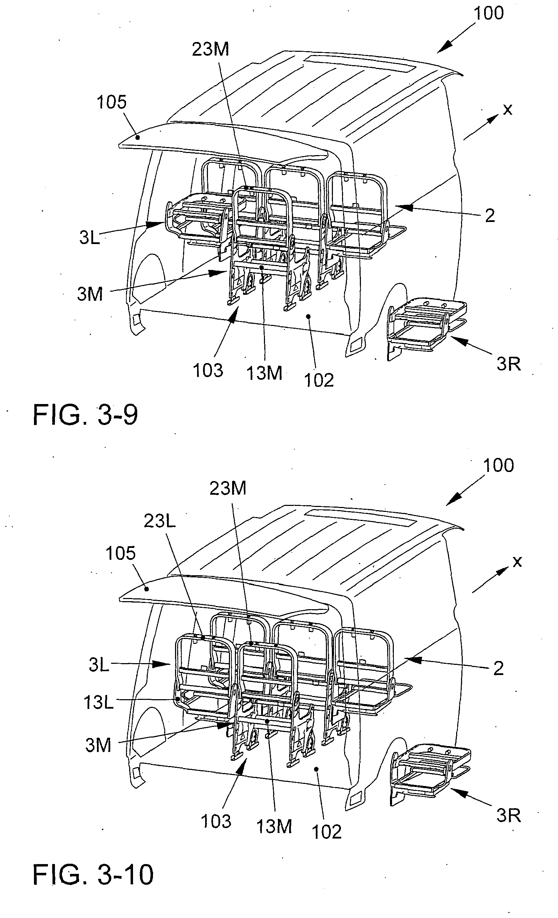

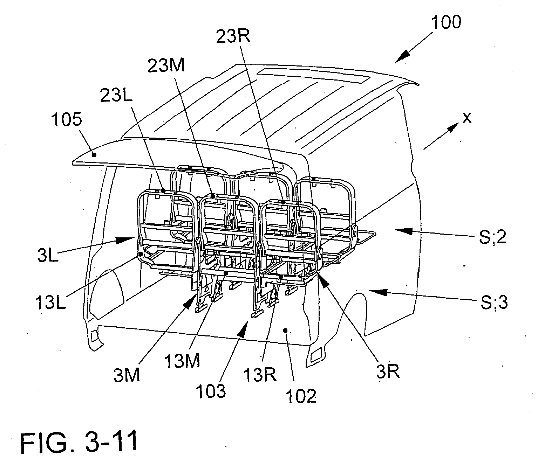

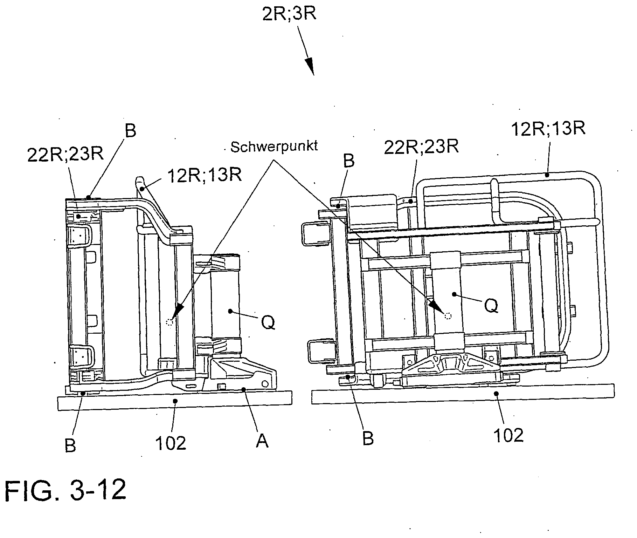

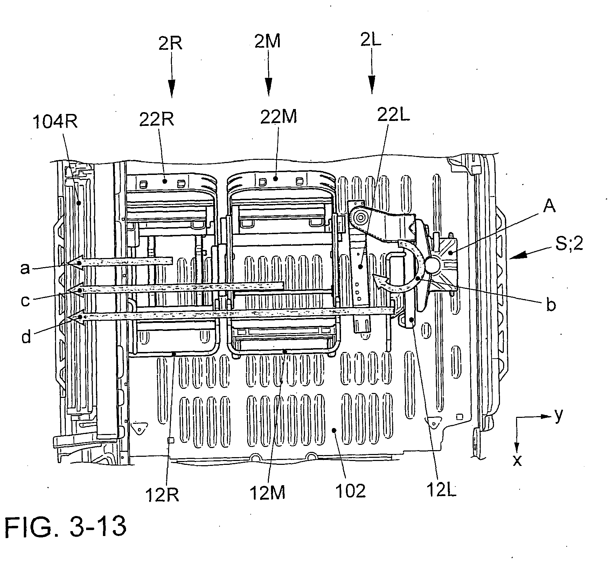

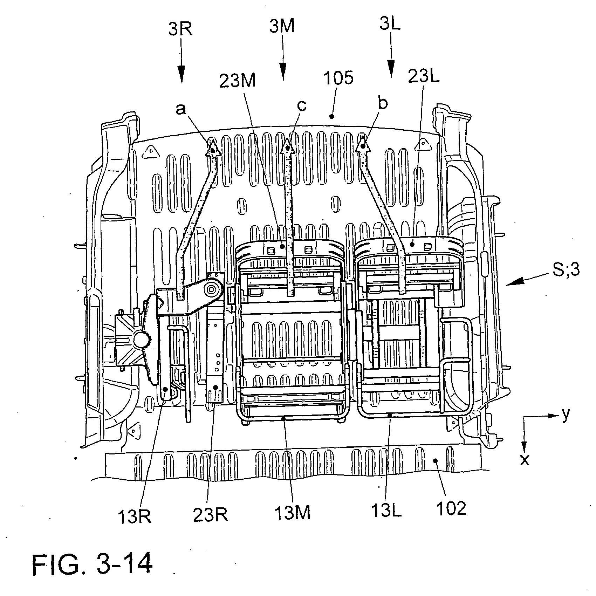

- Figur 3-7 bis 3-11: jeweils eine perspektivische Ansicht in den Innenraum des Fahrzeuges schräg von hinten zur Darstellung einer Einbaureihenfolge einer dreisitzigen Sitzbank in einer dritten Sitzreihe;
- Figur 3-12: in einer linken und einer rechten Abbildung einen an einem Basissitz rechts anordbaren Sitz, wobei der Sitz in der linken Abbildung von hinten und der Sitz in der rechten Abbildung von unten dargestellt ist;
- Figur 3-13: eine Ansicht in den Innenraum des Fahrzeuges im Bereich der zweiten Sitzreihe;
- Figur 3-14: eine Ansicht in den Innenraum des Fahrzeuges im Bereich der dritten Sitzreihe;

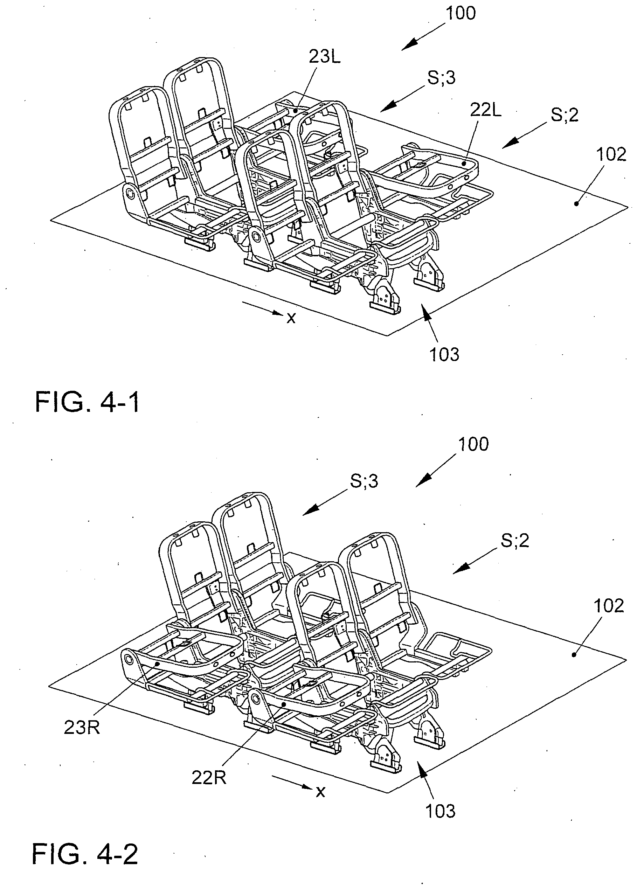

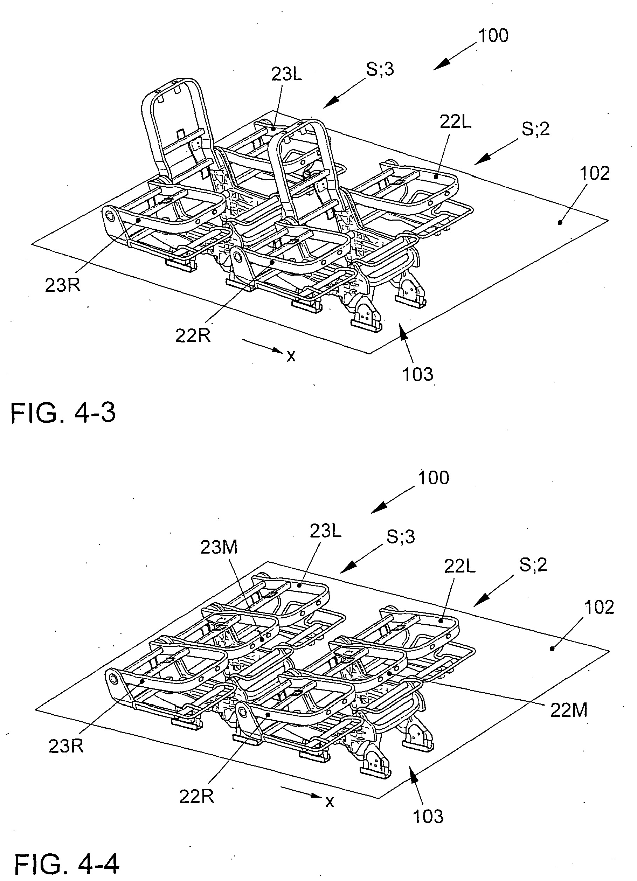

- Figur 4-1 bis 4-4: eine perspektivische Darstellung der zweiten und der dritten Sitzreihe mit verschiedenen möglichen Einzeltischfunktionen;

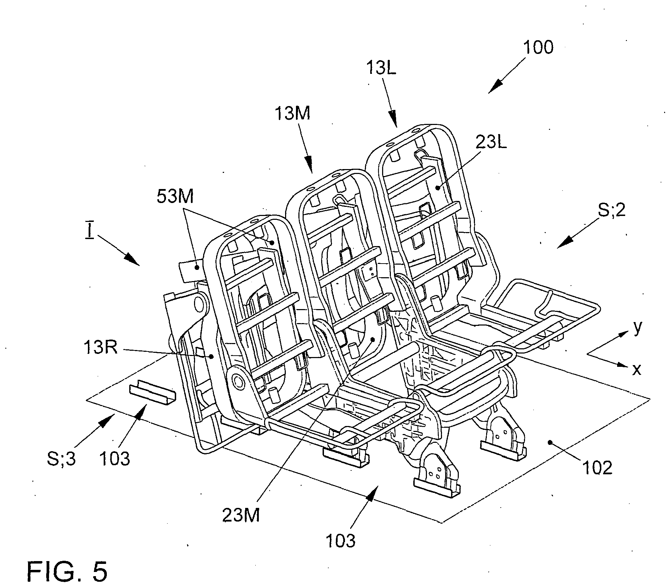

- Figur 5: eine perspektivische Darstellung einer Wickelstellung am Beispiel der dritten Sitzreihe;

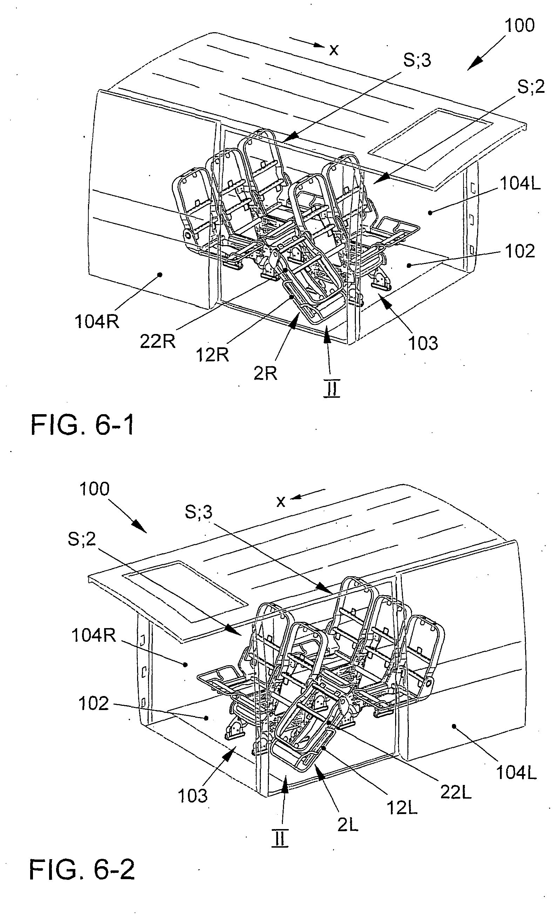

- Figur 6-1 und 6-2: eine perspektivische Darstellung von rechts und von links in den Innenraum des Fahrzeuges mit einer Easy-Entry-Klappstellung eines jeweiligen Seitensitzes der zweiten Sitzreihe;

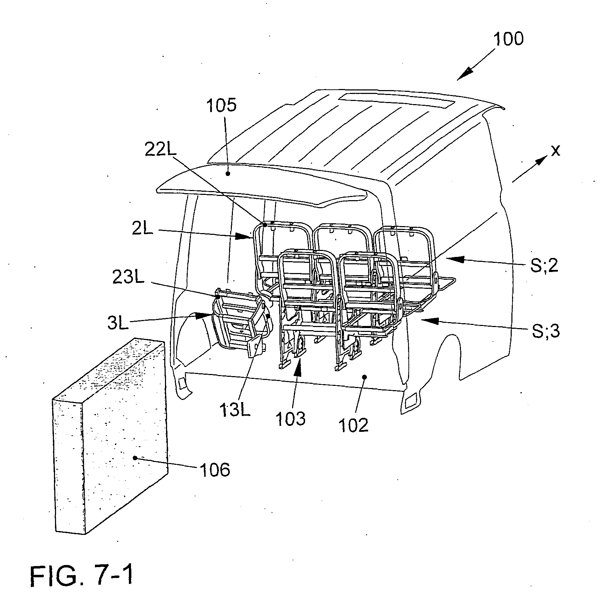

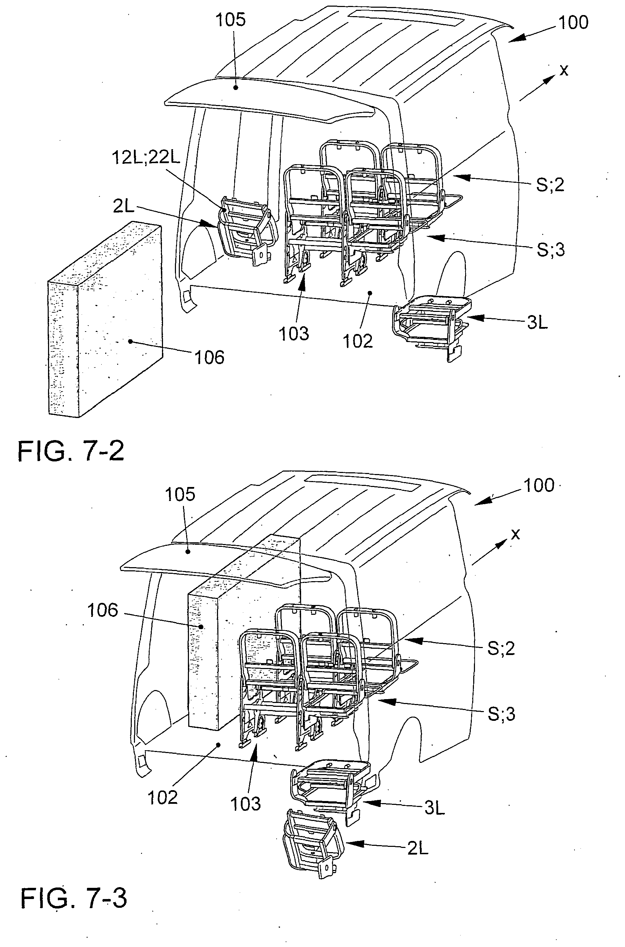

- Figuren 7-1 bis 7-3: perspektivische Ansichten in den Innenraum des Fahrzeuges von seiner Heckseite zur Darstellung einer Veränderbarkeit des Innenraumes zur Erzeugung von zusätzlichem Stauraum;

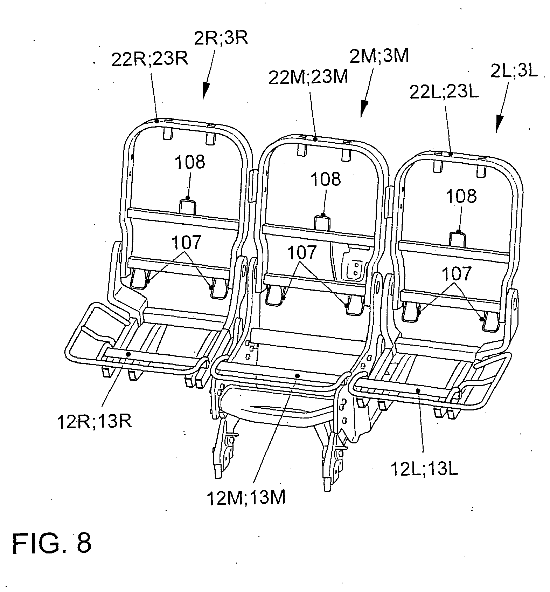

- Figur 8: eine Sitzbank der zweiten oder dritten Sitzreihe mit integrierten ISOFIX-Anbindungen und Top-Tether-Anbindungen;

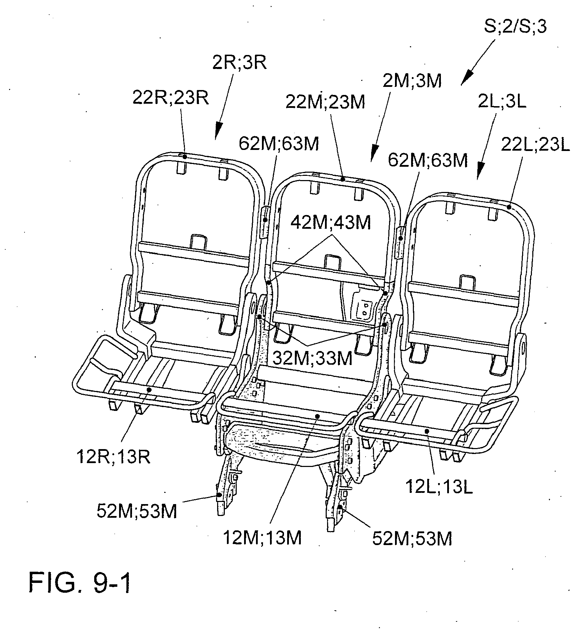

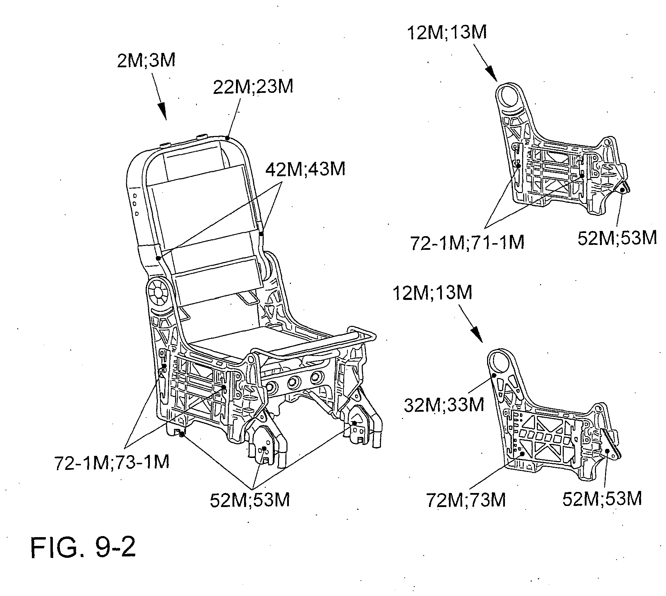

- Figur 9-1 und 9-2: eine Sitzbank (Figur 9-1) und einen Einzel-Fahrzeugsitz (Figur 9-2) mit Darstellung der Materialkonzeption;

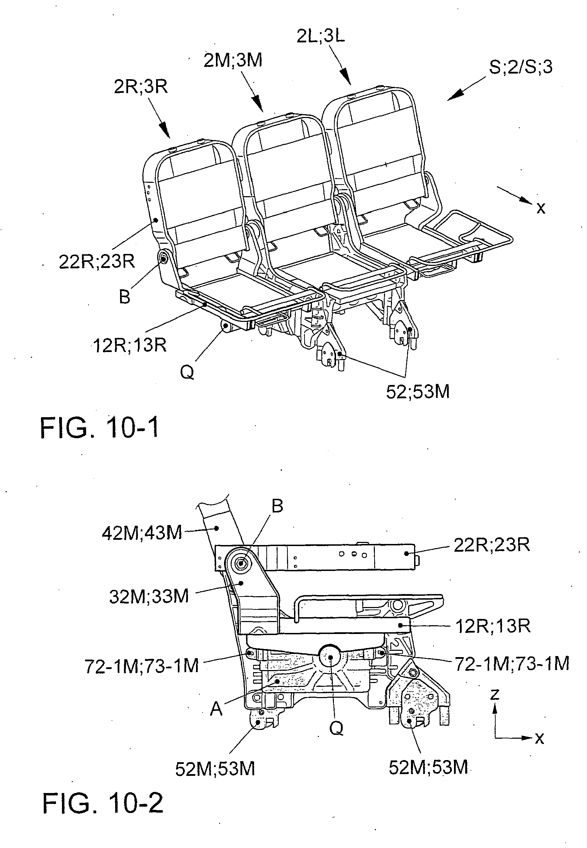

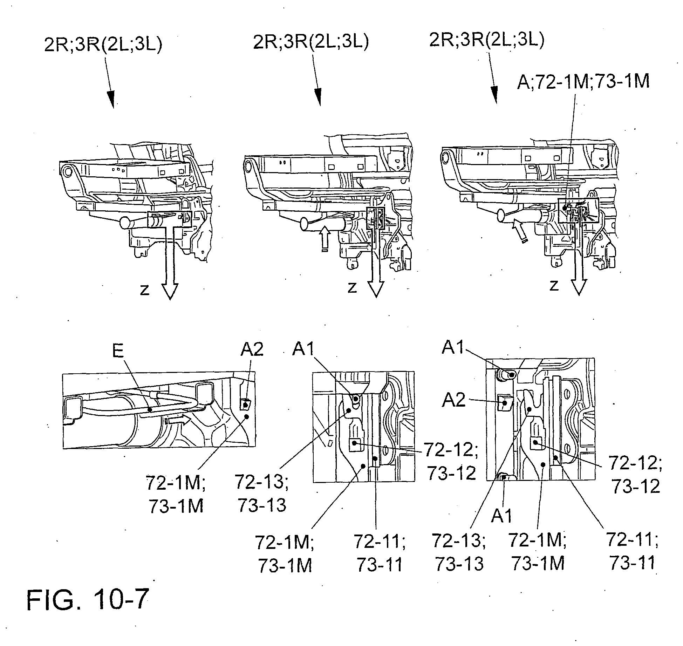

- Figur 10-1 bis 10-7: eine technische Lösung zur Realisierung einer Easy-Entry-Klappstellung sowie die Entnahmelösung für frei schwebende Seitensitze gegenüber den Basissitzen;

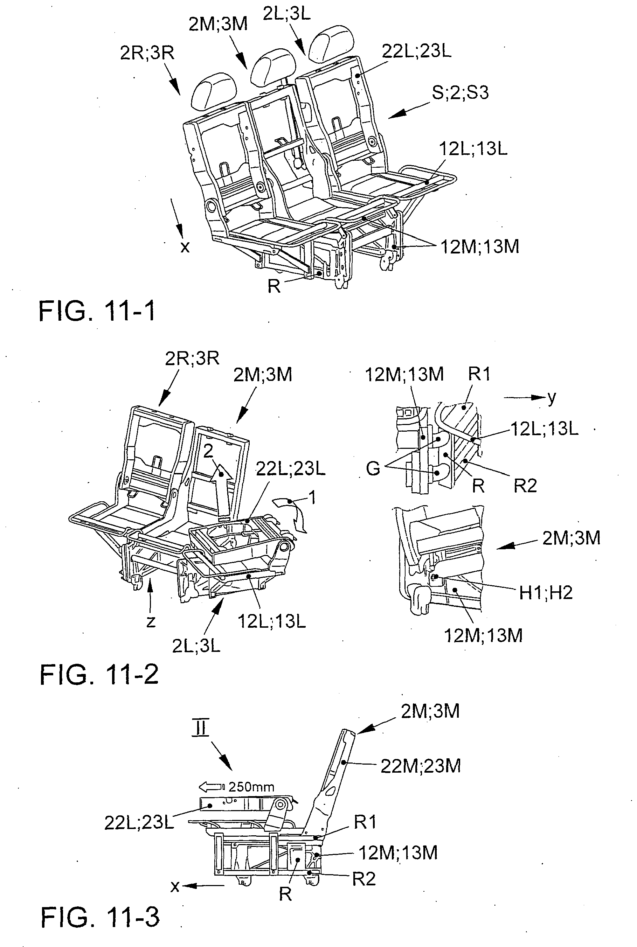

- Figur 11-1 bis 11-3: eine weitere technische Lösung zur Realisierung einer Easy-Entry-Klappstellung sowie eine weitere Entnahmelösung für frei schwebende Seitensitze gegenüber den Basissitzen;

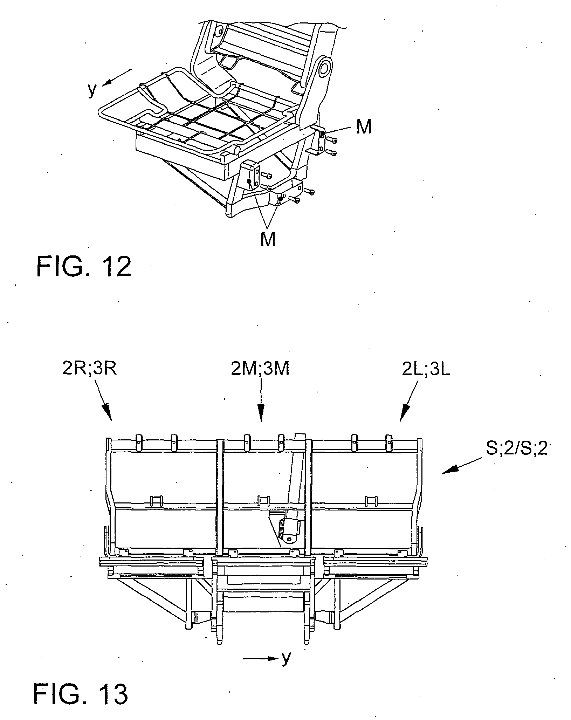

- Figur 12 und 13: eine Basisversion einer Sitzbank in einer zweiten oder dritten Sitzreihe;

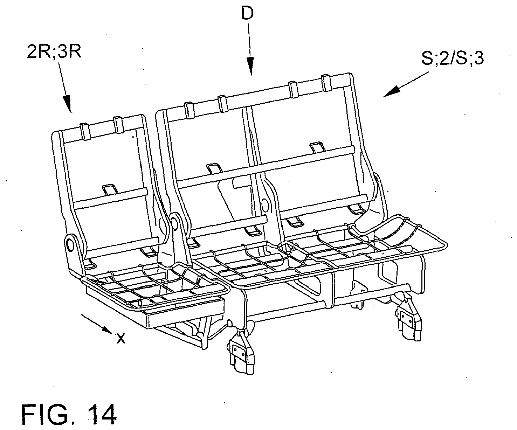

- Figur 14: ein alternatives Sitzkonzept einer Sitzbank in einer zweiten oder dritten Sitzreihe; und

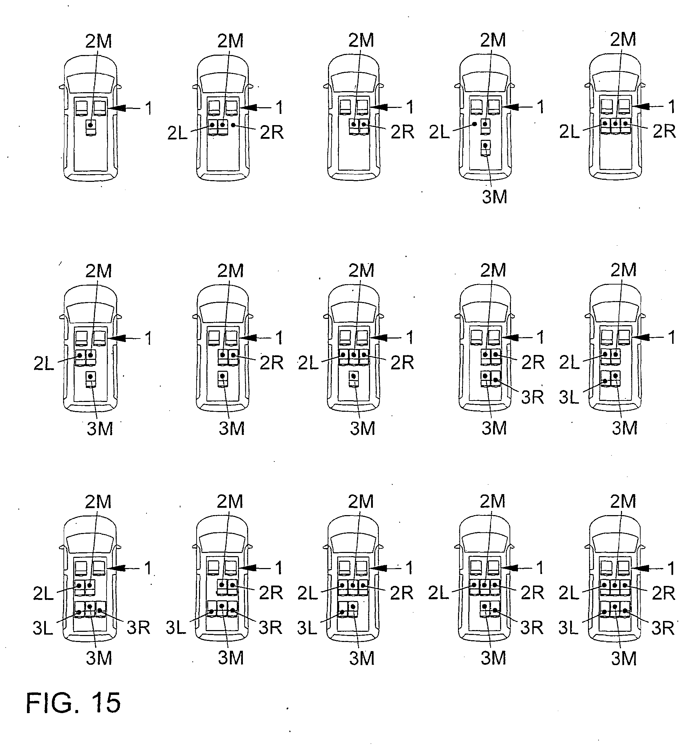

- Figur 15: mögliche Sitzvarianten.

Die Anordnung eines Fahrzeugsitzes innerhalb eines Kraftfahrzeuges und dessen gewöhnliche Fahrtrichtung bestimmen die nachfolgenden Richtungsangaben. In beziehungsweise entgegen der Fahrtrichtung entspricht der x-Richtung, die Vertikale in einem Fahrzeug ist mit der z-Richtung festgelegt, wobei die Achsen quer zur Fahrtrichtung in y-Richtung verlaufen.

Ferner werden die in der gewöhnlichen Fahrtrichtung x liegenden Seiten eines Fahrzeuges 100 als linke und rechte Seite bezeichnet. Eine Sitzbank S liegt im gewöhnlichen Einbauzustand bezogen auf eine Längsrichtung des Fahrzeuges in x-Richtung quer zur Längsrichtung x in y-Richtung.

In der nachfolgenden Figurenbeschreibung werden für gleiche Komponenten und Bauteile stets die gleichen Bezugszeichen verwendet, wobei sich in den Figuren wiederholende Bezugszeichen teilweise nicht erneut genannt werden.

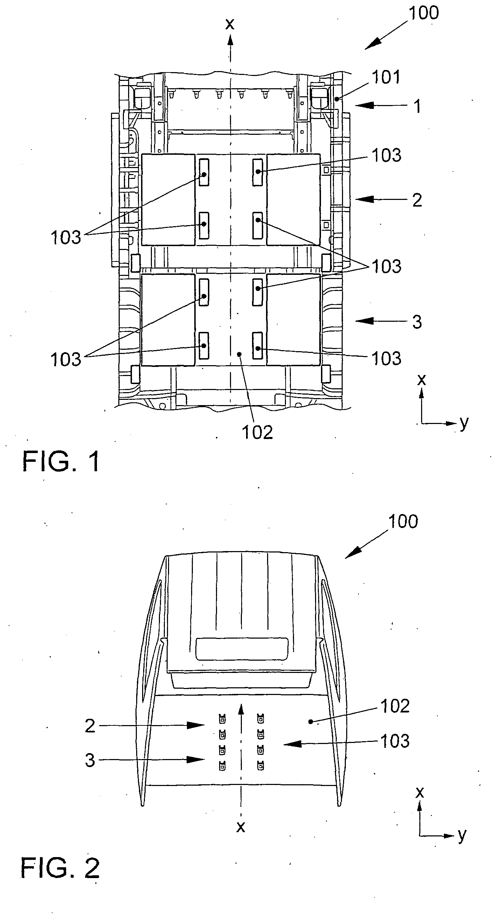

Die Figur 1 zeigt einen Schnitt im Bereich eines Fahrzeugbodens 102 einer Fahrzeugkarosserie 101 eines Fahrzeuges 100 in einer Ansicht von oben. Das Fahrzeug 100 weist eine erste Sitzreihe 1, eine zweite Sitzreihe 2 und eine dritte Sitzreihe 3 auf. Die erste Sitzreihe 1 ist nicht näher dargestellt. In der ersten Sitzreihe 1 ist beispielsweise ein Einzel-Fahrzeugsitz für den Fahrer und ein Einzel-Fahrzeugsitz für den Beifahrer angeordnet. Es besteht auch die Möglichkeit, in der ersten Sitzreihe 1 einen Einzel-Fahrzeugsitz für den Fahrer und für zwei Beifahrer-Sitze als Doppel-Sitzbank S anzuordnen. Schließlich kann in der ersten Sitzreihe 1 auch eine dreisitzige Sitzbank S für den Fahrer und zwei Beifahrer angeordnet werden. Dabei besteht die Möglichkeit der Anordnung einer herkömmlichen dreisitzigen Sitzbank oder einer Sitzbank S, wie sie gemäß der Erfindung in der zweiten und dritten Sitzreihe 2, 3 in einem Fahrzeug 100 verwendet wird. Die erfindungsgemäßen Sitzbänke S werden in den nachfolgenden Figuren näher beschrieben. Der Schnitt im Bereich des Fahrzeugbodens 102 zeigt, dass der zweiten und dritten Sitzreihe 2, 3 jeweils nur vier Anbindungspunkte 103 zugeordnet sind. Diese Anbindungspunkte 103 befinden sich in oder auf dem Fahrzeugboden 102 und sind in Bezug auf eine in Längsrichtung x verlaufende Mittelachse des Fahrzeuges 100 links und rechts zu dieser Mittelachse symmetrisch angeordnet. Wie Figur 1 bereits zeigt, ist die zweite Sitzreihe 2 mit einer Easy-Entry-Funktion ausgestattet, wobei die Easy-Entry-Funktion und die Funktion der dritten Sitzreihe später noch detailliert erläutert werden.

Die Figur 2 zeigt in einer perspektivischen Ansicht in einen Innenraum des Fahrzeuges 100 den Fahrzeugboden 102 und die Anbindungspunkte 103 für die zweite und dritte Sitzreihe 2, 3, die in Bezug auf die in Längsrichtung verlaufende Mittelachse des Fahrzeuges 100 links und rechts zu dieser Mittelachse symmetrisch angeordnet sind.

Die Figuren 3-1 bis 3-6 zeigen jeweils eine perspektivische Ansicht in den Innenraum des Fahrzeuges 100 schräg von vorn zur Darstellung einer Einbaureihenfolge einer dreisitzigen Sitzbank S in einer zweiten Sitzreihe 2.

Die Erläuterung der Einbaureihenfolge findet in einer ersten Ausführungsvariante anhand einer Fahrzeugkarosserie 101 statt, die eine linke Seitentür 104L und eine rechte Seitentür 104R aufweist.

Die dreisitzige Sitzbank S umfasst einen mittleren Basissitz 2M sowie einen linken Sitz 2L und einen rechten Sitz 2R. Gemäß Figur 3-1 wird der mittlere Basissitz 2M zuerst in den Innenraum des Fahrzeuges 100 verbracht, wobei die Rückenlehne 22M vorzugsweise auf das Sitzteil 12 M heruntergeklappt ist. Gemäß Figur 3-2 wird der mittlere Basissitz 20M auf die vier Anbindungspunkte 103 gestellt. Auf die Ausgestaltung der Verbindung zwischen den karosserieseitigen Anbindungspunkten 103 und dem mittleren Basissitz 2M wird später noch detailliert eingegangen. Nachdem der mittlere Basissitz 2M angeordnet worden ist, kann die Rückenlehne 22M des mittleren Basissitzes 2M hochgeklappt werden. Diese Situation ist in Figur 3-3 gezeigt, wobei gleichfalls gezeigt wird, wie der rechte Sitz 2R über die rechte Seitentür 104R in den Innenraum des Fahrzeuges 100 verbracht wird. Dabei ist die Rückenlehne 22R auf das Sitzteil 12R geklappt. Gemäß Figur 3-4 wird der rechte Sitz 2R seitlich an dem Basissitz 2M befestigt. Gemäß Figur 3-5 kann anschließend die Rückenlehne 22R bereits hochgeklappt werden, wobei die Figur gleichfalls zeigt, wie der linke Sitz 2L über die linke Seitentür 104L in den Innenraum des Fahrzeuges 100 verbracht ist. Auch bei dem linken Sitz 2L ist die Rückenlehne 22L beim Verbringen des linken Sitzes 2L in den Innenraum des Fahrzeuges 100 noch auf das Sitzteil 12L geklappt. Gemäß Figur 3-6 wird auch der linke Sitz 2L seitlich am mittleren Basissitz 2M befestigt und anschließend die Rückenlehne 22L geklappt. In Figur 3-6 wird deutlich, dass die seitlichen Sitze 2L und 2R über dem Fahrzeugboden 102 frei schwebend angeordnet sind. Soll nur eine zweisitzige Sitzbank S eingebaut werden, kann auf den Einbau des linken oder rechten Sitzes 2L, 2R verzichtet werden.

Die Figuren 3-7 bis 3-11 zeigen jeweils eine perspektivische Ansicht in den Innenraum des Fahrzeuges 100 zur Darstellung einer Einbaureihenfolge einer dreisitzigen Sitzbank S in einer dritten Sitzreihe 3.

Das Fahrzeug 100 weist eine Hecktür 105 auf, von der aus der Einbau der dritten Sitzreihe 3 vorgenommen wird. Die dreisitzige Sitzbank S umfasst einen mittleren Basissitz 3M sowie einen linken Sitz 3L und einen rechten Sitz 3R. Gemäß Figur 3-7 wird der mittlere Basissitz 3M zuerst von hinten über die Hecktür 105 in den Innenraum des Fahrzeuges 100 verbracht, wobei der mittlere Basissitz 3M zuerst in die vorderen beiden Anbindungspunkte 103 der vier Anbindungspunkte für die dritte Sitzreihe 3 eingestellt wird. Die Rückenlehne 23M des mittleren Basissitzes 3M ist zu diesem Zweck insbesondere dann, wenn bereits die zweite Sitzreihe 2 eingebaut worden ist, noch auf das Sitzteil 13M heruntergeklappt. Gemäß Figur 3-8 wird der mittlere Basissitz 3M heruntergeschwenkt, so dass die Verbindung zwischen den vier karosserieseitigen Anbindungspunkten 103 und dem mittleren Basissitz 3M hergestellt wird, wobei auf die Details der Ausgestaltung der Verbindung später noch eingegangen wird. Nachdem der mittlere Basissitz 3M angeordnet worden ist, kann die Rückenlehne 23M des mittleren Basissitzes 3M hochgeklappt werden. Diese Situation ist in Figur 3-10 gezeigt, wobei gleichfalls gezeigt wird, wie der linke Sitz 3L in den Innenraum des Fahrzeuges 100 verbracht wird. Dabei ist die Rückenlehne 23L auf das Sitzteil 13L geklappt. Der linke Sitz 3L wird seitlich an dem Basissitz 3M befestigt. Wie Figur 3-10 und Figur 3-11 zeigen, kann anschließend die Rückenlehne 23L hochgeklappt werden, wobei der rechte Sitz 3R der dritten Sitzreihe 3 analog an dem mittleren Sitz 3M angebracht wird. Insbesondere in Figur 3-11 wird deutlich, dass die seitlichen Sitze 3L und 3R frei schwebend über dem Fahrzeugboden 102 angeordnet sind. Es versteht sich, dass eine zweisitzige Sitzbank S in der dritten Sitzreihe eingebaut werden kann, indem auf den Einbau des linken oder rechten Sitzes 3L, 3R verzichtet wird.

Figur 3-12 zeigt in einer linken und einer rechten Abbildung einen an einem Basissitz 2M, 3M einer zweiten oder einer dritten Sitzreihe 2, 3 rechts anordbaren Sitz 2R, 3R, wobei der Sitz 2R, 3R in der linken Abbildung von hinten und der Sitz 2R, 3R in der rechten Abbildung von unten dargestellt ist. Es versteht sich, dass der dargestellte rechts anordbare Sitz 2R, 3R auch so ausgestaltet werden kann, dass er an einem Basissitz 2M, 3M links anordbar ist.

Mit dem Sitzteil 12R, 13R ist ein Querrohr Q verbunden, welches einendseitig eine Adapterplatte A aufweist. Die Ausführung mit der Adapterplatte A stellt eine mögliche erste Befestigungsvariante dar. In den Figuren 11-1 bis 11-3 wird eine zweite Befestigungsvariante vorgestellt. Wie Figur 3-12 in der linken Abbildung zeigt, sind die Sitze 2R, 3R so konstruiert, dass sie auf der Adapterplatte A und einem Beschlag B zwischen Sitzteil 12R, 13R und Rückenlehne 22R, 23R des Sitzes abgelegt werden können. Hierzu können zur Vermeidung von Beschädigungen der Struktur oder von Hut-Teilen Abstandselemente aus Kunststoff oder Gummi vorgehalten werden. Das jeweilige Sitzteil 12R, 13R ist auf der Seite der Adapterplatte A so ausgebildet, dass es gegenüber der jeweiligen Rückenlehne 22R, 23R keinen Überstand bildet, so dass eine seitliche flache und sichere Ablage des Sitzes 2R, 3R - bei der der Sitz 2R, 3R sicher und stabil auf seiner Seite liegt - auf einem Fahrzeugboden 102, wie in Figur 3-12 dargestellt, möglich ist. Zudem würde durch die Konstruktion dafür gesorgt, dass der Schwerpunkt, der in beiden Abbildungen durch einen Punkt dargestellt ist - räumlich gesehen - zentral innerhalb des Sitzes 2R, 3R ausgebildet ist. Dieser zentrale Schwerpunkt ist für das Handling beim Ein- und Ausbau eines seitlichen Sitzes 2R, 3R beziehungsweise 2L, 3L von besonderer Bedeutung, da die Handhabung mit einem zentralen Schwerpunkt erleichtert wird. Erfindungsgemäß wird auch dafür gesorgt, dass auch der Basissitz 2M, 3M genauso wie die seitlichen Sitze 2R, 3R, 2L, 3L, einen zentralen - räumlich gesehen - innerhalb der Struktur des Sitzes 2M, 3M liegenden Schwerpunkt aufweist.

Die Möglichkeit, einen Seitensitz 2R, 3R, 2L, 3L zwischenzeitlich seitlich, flach auf einem Fahrzeugboden 102 abstellen zu können, ist von besonderem Vorteil, wie die nachfolgende Erläuterung zu den Figuren 3-13 und 3-14 verdeutlicht.

Die Figur 3-13 zeigt den Innenraum des Fahrzeuges 100 in einer Draufsicht im Bereich der zweiten Sitzreihe 2.

Die Figur 3-13 erläutert anhand der Ausbaureihenfolge in einer zweiten Ausführungsvariante, wie der Ausbau und der Einbau der Sitze 2R, 2M, 2L erfolgt, wenn die Fahrzeugkarosserie 101 beispielsweise nur eine rechte Seitentür 104R aufweist. Die rechte Seitentür 104R ist in Figur 3-13 links dargestellt.

In einem ersten Schritt a) wird der rechte Sitz 2R von dem Basissitz 2M getrennt und aus dem Inneren des Fahrzeuges 100 herausgenommen. Dabei kann die Rückenlehne 22R in Sitzposition verbleiben oder auf das Sitzteil 12R geklappt werden, bevor der rechte Sitz 2R herausgenommen wird.

In einem zweiten Schritt b) wird die Rückenlehne 22L des linken Sitzes 2L auf das Sitzteil 12L geklappt. Anschließend wird der linke Sitz 2L von dem Basissitz 2M getrennt und um 90° geschwenkt, so dass die flache Seite der Adapterplatte A und der Beschlag B, die zuvor seitlich des Basissitzes 2M angeordnet waren, auf dem Fahrzeugboden 102 aufliegen. Diese Vorgehensweise ist leicht durchführbar, da der Seitensitz 2L beziehungsweise die Seitensitze 2L, 2R keine Unterkonstruktion aufweisen und die Struktur auf das Wesentliche reduziert ist, so dass die Seitensitze insgesamt ein geringes Gewicht aufweisen. Wie nachfolgend noch weiter erläutert wird, werden die Seitensitze bis auf einige Bauteile, wie z. B. die Adapterplatte A aus einem Leichtbaumaterial hergestellt, so dass die leichte Handhabbarkeit für den Anwender sichergestellt ist.

In einem dritten Schritt c) wird der Basissitz 2M entriegelt und ausgebaut, wobei die Rückenlehne 22M in Sitzposition verbleiben oder auf das Sitzteil 12M geklappt werden kann, bevor der Basissitz 2M aus dem Innenraum des Fahrzeuges 100 herausgenommen wird.

In einem vierten Schritt d) wird schließlich der bereits zusammengeklappte linke Sitz 2L über die rechte Seitentür 14 R herausgenommen.

Es versteht sich, dass der Einbau in umgekehrter Reihenfolge vorgenommen wird, das heißt, der linke Sitz 2L wird zunächst im zusammengeklappten Zustand auf dem Fahrzeugboden 102 gegenüber der rechten Seitentür 104R abgelegt, wonach der Basissitz 2M verbaut wird. Anschließend kann der linke Sitz 2L mit dem Basissitz 2M verbunden werden, wonach schließlich der rechte Sitz 2R in den Innenraum verbracht und mit dem Basissitz 2M verbunden wird.

Für eine erleichterte Handhabung kann am Seitensitz 2L, 3L, 2R, 3R ein Haltegriff zum Tragen des um 90° gedrehten Sitzes 2L, 3L, 2R, 3R vorgesehen werden.

Die Figur 3-14 zeigt den Innenraum des Fahrzeuges 100 in einer Draufsicht im Bereich der zweiten Sitzreihe 2.

Die Figur 3-14 erläutert anhand der Ausbaureihenfolge, wie der Ausbau und der Einbau der Sitze 3R, 3M, 3L über die Hecktür 105 erfolgt.

In einem ersten Schritt a) wird die Rückenlehne 23R des rechten Sitzes 3R auf das Sitzteil 13R geklappt. Anschließend wird der rechte Sitz 3R von dem Basissitz 3M getrennt und um 90° geschwenkt, so dass die flache Seite der Adapterplatte A und der Beschlag B, die zuvor seitlich des Basissitzes 3M angeordnet waren, auf dem Fahrzeugboden aufliegen. Selbstverständlich kann auch mit dem linken Sitz 3L begonnen werden. Dadurch, dass der rechte Sitz 3R platzsparend zusammengeklappt auf der Seite liegt, kann er problemlos im Zwischenraum zwischen der seitlichen Fahrzeugkarosserie 101 und der seitliche Begrenzung des Basissitzes 3M über die Heckklappe 105 aus dem Innenraum des Fahrzeuges 100 herausgenommen werden.

In einem zweiten Schritt b) wird analog mit dem linken Sitz 3L vorgegangen.

Schließlich wird in einem dritten Schritt c) der Sitz 3M entriegelt und ausgebaut, wobei die Rückenlehne 23M in Sitzposition verbleiben oder auf das Sitzteil 13M geklappt werden kann, bevor der Basissitz 3M aus dem Innenraum des Fahrzeuges 100 herausgenommen wird.

Der Einbau erfolgt in umgekehrter Reihenfolge, das heißt, der Basissitz 3M wird zuerst eingebaut. Anschließend wird der linke oder der rechte Sitz 3L, 3R eingehoben und an dem Basissitz 3M befestigt, wobei der linke und der rechte Sitz 3L, 3R zur Befestigung an dem Basissitz 3M zwischenzeitlich seitlich auf der Adapterplatte A und dem Beschlag B abgelegt werden können.

Die Figuren 4-1 bis 4-4 zeigen in perspektivischen Darstellungen verschiedene Möglichkeiten zur Herstellung von Tischablagen, die durch die Rückseite der jeweiligen Rückenlehne der Sitze gebildet werden.

Beispielsweise wird gemäß Figur 4-1 durch Umklappen der Rückenlehne 22L, 23L auf der linken Seite des Fahrzeuges 100 sowohl in der zweiten Sitzreihe 2 als auch in der dritten Sitzreihe 3 jeweils ein Tisch gebildet.

Figur 4-2 zeigt die analoge Anordnung auf der rechten Seite des Fahrzeuges 100.

In einer alternativen Ausführung, bei der für jede Rückenlehne ein Beschlag vorgesehen ist, können auch die mittleren Lehnen einzeln zu einem Tisch heruntergeklappt werden.

Figur 4-3 zeigt die Sitzanordnung, bei der links und rechts vom Basissitz 2M, 3M jeweils eine Tischablage durch die Rückseite der Rückenlehnen 22L, 22R, 23L, 23R gebildet wird.

Schließlich zeigt Figur 4-4 eine tischähnliche Fläche, die durch die Rückseiten aller Rückenlehnen der Sitze der zweiten und dritten Sitzreihe 2, 3 gebildet wird. Hierdurch ergibt sich eine große Ablagefläche mit einem vergrößerten Stauraum zur Verbringung von Gegenständen in den Innenraum des Fahrzeuges 100. Die Gegenstände können über die nicht dargestellte Hecktür 105 oder auch über mindestens eine der nicht dargestellten Seitentür 104L, 104R in den Innenraum verbracht werden.

Figur 5 zeigt am Beispiel der dritten Sitzreihe 3, dass die dritte Sitzreihe 3 als Ganzes aus einer Sitzgebrauchsposition in eine Wickelstellung I überführbar ist. Dazu werden zunächst die Rückenlehnen 23L, 23M, 23R auf die Sitzteile 13L, 13M, 13R geklappt. Anschließend ist die Wickelstellung I der dritten Sitzreihe einfach herstellbar, da zum Wickeln der gesamten Sitzbank S lediglich eine Entriegelung der hinteren Sitzfüße 53M des Basissitzes 3M notwendig ist, um die Sitzbank S über die vorderen Sitzfüße 53M des Basissitzes 3M verschwenken zu können. Die Sitzfüße bleiben fest im Fahrzeugboden 102 verankert. Die Schwenkbewegung ist möglich, da das Sitzteil 13M des Basissitzes 3M gegenüber den vorderen Sitzfüßen 53M schwenkbar angelenkt ist. Dieser Vorteil wird durch die geringe Anzahl der Anbindungspunkte 103 einer Sitzbank S am Fahrzeugboden 102 hervorgerufen. Die gegenüber dem Fahrzeugboden 102 frei schwebenden Sitze 3L, 3R müssen zum Wickeln der Sitzbank S nicht separat vom Fahrzeugboden 102 entriegelt werden.

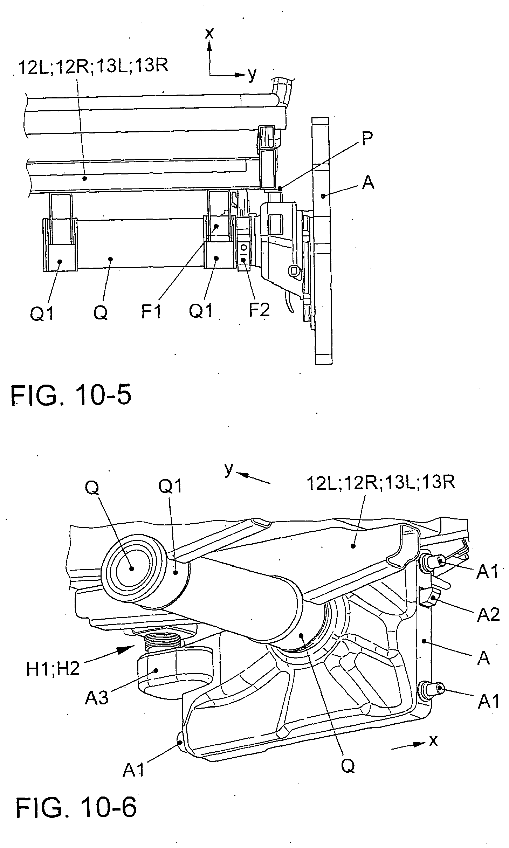

Figur 6-1 und 6-2 zeigen jeweils eine perspektivische Darstellung von rechts und von links in den Innenraum des Fahrzeuges 100 mit einer Easy-Entry-Klappstellung II eines jeweiligen Seitensitzes 2R, 2L der zweiten Sitzreihe 2. Diese Easy-Entry-Klappstellung II, bei der der jeweilige Seitensitz 2R, 2L unter Klappung der Rückenlehne 22R, 22L auf das Sitzteil 12R, 12L in eine nach vorn verschwenkte Position verbracht wird, ermöglicht für einen Passagier einen erleichterten Zugang zur dritten Sitzreihe 3. Easy-Entry-Klappstellungen II sind an sich bekannt. Die zugehörige detaillierte technische Lösung zur Durchführung der Easy-Entry-Klappstellung II wird in den Figuren 10-1 bis 10-6 detailliert beschrieben.

Die Figuren 7-1 bis 7-3 zeigen in perspektivischen Ansichten den Innenraum des Fahrzeuges von seiner Heckseite zur Darstellung einer Veränderbarkeit des Innenraumes zur Erzeugung von zusätzlichem Stauraum.

Um beispielsweise einen Gegenstand in der Größe von circa B/H/T 300x1300x 2000 mm in den Innenraum des Fahrzeuges 100 verbringen zu können, wird wie in Figur 7-1 der linke Sitz 3L der hinteren Sitzreihe 3 über die Heckklappe 105 ausgebaut. Anschließend erfolgt, wie Figur 7-2 zeigt, der Ausbau des linken Sitzes 2L der zweiten Sitzreihe 2. Der besondere Vorteil besteht darin, dass die seitlichen Sitze 2L, 3L nicht an der Karosserie angebunden sind, so dass die Abstellfläche für einen Gegenstand frei von jeglichen Ein- oder Anbauten ist. Die seitlichen Sitze müssen über die einfach gehaltenen Entriegelungen vom Basissitz 2M, 3M getrennt werden und können dadurch, dass sie zudem in Leichtbauweise hergestellt sind, einfach und leicht von einer Person entnommen werden. Die Figur 7-3 zeigt, wie der Transportgegenstand 106 im Innenraum des Fahrzeuges 100 untergebracht ist. Auf die beschriebene Art und Weise kann auch im rechten Bereich des Innenraumes ein zusätzlicher Stauraum erzeugt werden. Durch Ausbau der Basissitze 2M, 3M kann der gesamte Innenraum als Stauraum verwendet werden.

Die Figur 8 zeigt, dass in den Sitzen 2L, 2M, 2R sowie 3L, 3M, 3R einer Sitzbank S der zweiten und/oder dritten Sitzreihe 2, 3 ISOFIX-Anbindungen 107 für Kindersitze mit unterer Anbindung und ferner Top-Tether-Anbindungen 108 für Kindersitze mit unterer Anbindung über ISOFIX-Anbindungen 107 und mit einer zusätzlichen oberen Anbindung mittels eines Befestigungsgurtes integriert sind.

In den nachfolgenden Figuren werden für den im Zusammenhang mit dem bisher vorgestellten Sitzkonzept weitere technische Details erläutert.

In den Figuren 9-1 und 9-2 wird das Leichtbaukonzept für eine Sitzbank S und insbesondere die eines Basissitzes 2M, 3M dargestellt.

Wie Figur 9-1 zeigt, wird in einer Ausführungsform vorgeschlagen, die Sitzfüße 52M, 53M und die Struktur des Sitzteiles 12M, 13M als Ganzes aus einem Stahlwerkstoff herzustellen. Dabei ist vorgesehen, die Struktur des Sitzteiles 12M, 13M im hinteren Bereich mit Beschlagteilen 32M, 33M zu versehen, die vom Sitzteil 12M, 13M ausgehend in Richtung einer sich in Sitzposition befindenden Rückenlehne 22M, 23M im Wesentlichen rechtwinklig abgehen. Die Rückenlehne 22M, 23M des Basissitzes 3M wird aus einem Leichtbauwerkstoff hergestellt, wobei im Bereich der sitzteilseitigen Beschlagteile 32M, 33M Einleger als rückenlehnenseitige Beschlagteile 42M, 43M aus einem Stahlwerkstoff in den Leichtbauwerkstoff der Rückenlehne 22M, 23M integriert sind.

Zudem sind die in die Rückenlehne 22M, 23M des Basissitzes 2M, 3M integrierten Rückenlehnenanbindungen 62M, 63M ebenfalls aus einem Stahlwerkstoff hergestellt und mit der Rückenlehne 22M, 23M verbunden. Insbesondere die seitlichen Strukturteile des Sitzteiles 12M, 13M des Basissitzes 2M, 3M werden aus einem Stahlwerkstoff hergestellt, da sie das Eigengewicht der Seitensitze 2R, 3R beziehungsweise 2L, 3L und zusätzlich in einem Crashfall die im Basissitz 2M, 3M selbst und die in den Seitensitzen 2R, 3R beziehungsweise 2L, 3L auftretenden Crashkräfte, die in den Basissitz 2M, 3M eingeleitet werden, aufnehmen müssen. Die Seitensitze 2R, 3R beziehungsweise 2L, 3L sind ebenfalls aus einem Leichtbauwerkstoff hergestellt, wobei die sitzteilseitige Unterkonstruktion Komponenten aus einem Stahlwerkstoff umfasst, damit eine stabile Verbindung zu dem Basissitz 2M, 3M gewährleistet ist. Insbesondere die Befestigung an dem Basissitz 2M, 3M erfolgt über Stahlbauteile, die nachfolgend anhand der Figuren noch näher erläutert werden. Die sitzteilseitige Unterkonstruktion der seitlichen Sitze 2R, 3R beziehungsweise 2L, 3L aus dem Stahlwerkstoff ist in Figur 9-1 nicht sichtbar.

Wie Figur 9-2 zeigt, wird in einer zweiten Ausführungsform vorgeschlagen, das Sitzteil 12M, 13M des Basissitzes 2M, 3M aus einem Leichtbauwerkstoff herzustellen und an exponierten Stellen, an denen besonders hohe Kräfte in die Sitzteilstruktur eingeleitet werden, Einleger aus einem Stahlwerkstoff in die Sitzteilstruktur aus einem Leichtbauwerkstoff zu integrieren. In der linken Abbildung der Figur 9-2 ist ein Einzel-Basissitz 2M, 3M dargestellt, der im Wesentlichen aus einem Leichtbaumaterial hergestellt ist. Das rückenlehnenseitige Beschlagteil 42M, 43M ist in die ansonsten aus einem Leichtbaumaterial hergestellte Rückenlehne 22M, 23M integriert. In das jeweilige Seitenteil (transparent dargestellt) des Sitzteiles 12M, 13M (siehe Abbildung unten rechts) ist ein sitzteilseitiger Beschlag 32M, 33M als Einleger aus einem Stahlwerkstoff in den ansonsten aus dem Leichtbauwerkstoff hergestellten Seitenteil integriert. Ferner ist jeweils seitlich eine rahmenartige Verstärkungsstruktur 72M, 73M in den Leichtbauwerkstoff eingegossen, wobei Aufnahmeelemente 72-1M, 73-1M beidseitig aus dem Leichtbauwerkstoff der Seitenteile herausstehen, die dazu dienen, die seitlichen Sitze 2L, 3L beziehungsweise 2R, 3R aufzunehmen. Schließlich ist ein weiterer Einleger im vorderen Bereich und wahlweise zusätzlich auch im hinteren Bereich (nicht sichtbar) des jeweiligen Seitenteiles angeordnet, die jeweils einen aus dem Leichtbauwerkstoff herausstehenden Sitzfuß 52M, 53M des Basissitzes 2M, 3M bilden. In der Abbildung oben rechts ist das Seitenteil nicht transparent dargestellt, so dass lediglich die herausstehenden Aufnahmeelemente 72-1M, 73-1M und die herausstehenden Sitzfüße 52M, 53M sichtbar sind. Die dargestellten Aufnahmeelemente 72-1M, 73-1M dienen der Aufnahme der bereits erwähnten Adapterplatte A, worauf später noch detailliert eingegangen wird.

Die Figuren 10-1 bis 10-6 zeigen eine technische Lösung zur Realisierung der Easy-Entry-Klappstellung II der Entkopplung beziehungsweise Entnahme der frei schwebenden Seitensitze 2R, 2L, 3R, 3L. Gleichzeitig wird auf die Werkstoffauswahl bezüglich der Verbindung der Seitensitze 2R, 2L, 3R, 3L mit den Basissitzen 2M, 3M eingegangen.

Figur 10-1 zeigt noch einmal zur Verdeutlichung eine dreisitzige Sitzbank S, die in der zweiten oder dritten Sitzreihe 2, 3 verbaubar ist.

Die dreisitzige Sitzbank S ist in Figur 10-2 in einer Seitenansicht von links dargestellt. Im Vordergrund liegt der rechte Sitz 2R, 3R, bei dem die Rückenlehne 22R, 23R bereits auf das Sitzteil 2R, 3R heruntergeklappt ist. Dadurch wird im Hintergrund die Rückenlehne 22M, 23M des Basissitzes 2M, 3M sichtbar. Da der rechte Sitz 2R, 3R frei schwebend an dem Basissitz 2M, 3M angeordnet ist, wird in Figur 10-2 auch das Seitenteil des Basissitzes 2M, 3M sichtbar. Aus diesem Seitenteil ragen die bereits beschriebenen Aufnahmeelemente 72-1M, 73-1M heraus, die für die Aufnahme der Adapterplatte A des rechten Sitzes 2R, 3R vorgesehen sind. Sichtbar ist zudem die Stirnseite des Querrohres Q und die aus dem Seitenteil herausragenden Sitzfüße 52M, 53M im vorderen und im hinteren Bereich. Hier wird bereits sichtbar, dass die Sitzfüße 52M, 53M Verriegelungshaken aufweisen, die eine Befestigung des Basissitzes 2M, 3M in den Anbindungspunkten 103 des Fahrzeugbodens 102 ermöglichen.

Der rückenlehnenseitige Beschlag 42M, 43M und der sitzteilseitige Beschlag 32M, 33M, die Sitzfüße 52M, 53M und die Aufnahmeelemente 72-1M, 73-1M, die von der Verstärkungsstruktur 72M, 73M innerhalb des Seitenteiles des Basissitzes 2M, 3M abgehen, sind aus einem Stahlwerkstoff hergestellt. Die Adapterplatte A ist ebenfalls aus einem Stahlwerkstoff hergestellt und wird über die aus dem Seitenteil herausragenden Aufnahmeelemente 72-1M, 73-1M, von den vorzugsweise zwei oben, zwei unten angeordnet sind, mit dem Seitenteil des Basissitzes 2M, 3M verbunden. Die Adapterplatte A weist dazu Befestigungselemente A1 auf.

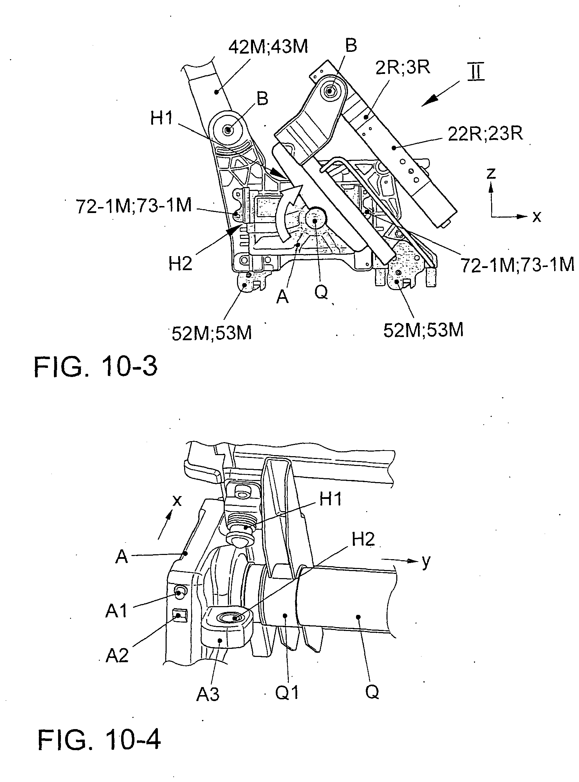

Mit gleichen Bezugszeichen zeigt Figur 10-3 den rechten Sitz 2R, 3R in seiner Easy-Entry-Klappstellung II. Der rechte Sitz 2R, 3R wird bei der ersten Befestigungsvariante über das von der Adapterplatte A im normalen Einbauzustand in y-Richtung abgehende Querrohr Q in Fahrtrichtung, der x-Richtung nach vorn geschwenkt.

Bevor die Verschwenkung durchführbar ist, muss eine Haltevorrichtung, die ein Halteelement H1 und eine Halteelementaufnahme H2 umfasst, entriegelt werden. Diese Haltevorrichtung ist in Figur 10-4 dargestellt. Sie ist, wie Figur 10-3 zeigt, im hinteren Bereich des rechten Seitensitzes 2R, 3R angeordnet.

Die Figur 10-4 bietet eine perspektivische Ansicht schräg von hinten auf die Haltevorrichtung und die Adapterplatte A sowie auf das von der Adapterplatte A abgehende Querrohr Q. Nachdem die Haltevorrichtung von einem Bediener entriegelt worden ist, kann der Sitz 2R, 3R in die Easy-Entry Klappstellung II verschwenkt werden.

Die Haltevorrichtung ist von besonderem Vorteil, da das sitzteilseitige Halteelement H1 ein eigenes Federelement aufweist, an dem sich ein Ring abstützt, wobei Federelement und Ring auf einem Bolzen sitzen, der eine konusartige Spitze aufweist. Beim Verriegeln des rechten Sitzes 2R, 3R greift diese konusartige Spitze in die Halteelementaufnahme H2 ein, die in einem seitlich von der Adapterplatte A abgehenden Steg A3 angeordnet ist. Dabei wird der Ring gegenüber dem Bolzen verschoben und das Federelement gespannt. Durch die Verschiebung des Ringes werden Elemente frei, die in einer Nut der Halteelementaufnahme H 2 zur Verriegelung des rechten Sitzes 2R, 3R führen. Bei der Entriegelung des rechten Sitzes 2R, 3R wird die Verriegelung in der Haltelementaufnahme H2 aufgehoben und das Federelement sorgt dafür, dass der hintere Bereich des rechten Sitzes 2R, 3R ausfedert und leicht angehoben wird. Ein Bediener spürt und sieht in vorteilhafter Weise, dass der Sitz zur Durchführung der Schwenkbewegung in die Easy-Entry-Klappstellung II freigegeben ist.

Figur 10-4 zeigt ferner das hintere obere Befestigungselement A1 und das hintere obere Verriegelungselement A2. Zudem wird gezeigt, dass der rechte Sitz 2R, 3R über Querrohraufnahmen Q1 schwenkbar mit dem Querrohr Q verbunden ist.

Figur 10-5 zeigt die Seitensitze 2R, 3R in einer Ansicht von vorn. Die beiden Querrohraufnahmen Q1 sind dargestellt, wobei die rechte Querrohraufnahme Q1 zusätzlich ein Fixierungselement F 1 aufweist, welches seitlich in y-Richtung koaxial zur Achse des Querrohres Q gegenüber der Querrohraufnahme Q1 heraussteht. An dem Querrohr Q sitzt eine Fixierungselementaufnahme F2 mit einer Vertiefung. Wird der rechte Sitz 2R, 3R in die Easy-Entry-Klappstellung II verschwenkt, schwenkt das Fixierungselement F 1 mit und läuft mit einem freien Ende auf der Fixierungselementaufnahme F2 auf, bis das Endstück des in diesem Ausführungsbeispiel zylindrischen Bolzens in die Vertiefung der Fixierungselementaufnahme F2 einschnappt. Je nach Anordnung der Fixierungselementaufnahme F2 kann der Schwenkwinkel der Easy-Entry-Klappstellung II festgelegt werden. Figur 10-5 zeigt zudem, dass im Bereich des konischen Übergangs von der Adapterplatte A zu dem Querrohr Q ein Pufferelement P angeordnet ist. Dieses Pufferelement P weist zwei Anlageflächen auf, an denen ein Halteteil der Unterkonstruktion des Sitzes 2R, 3R in der normalen Position und in der Easy-Entry-Klappstellung zur Anlage kommt. Dadurch wird beim Erreichen der Endstellungen ein harter Anschlag des rechten Sitzes 2R, 3R vermieden.

Figur 10-6 zeigt in einer Ansicht schräg von außen auf die Adapterplatte A, dass beispielsweise vier (zwei oben, zwei unten) Befestigungselemente A1 und zwei Verriegelungselemente A2 in der Adapterplatte A angeordnet sind. Das oben hinten liegende Befestigungselement A1 und Verriegelungselement A2 sind nicht sichtbar. Sie liegen an der Adapterplatte A hinter der Haltevorrichtung H1, H2. Die Befestigungselemente A1 und die Verriegelungselemente A2 dienen der Befestigung des rechten Sitzes 2R, 3R am Seitenteil des Basissitzes 2M, 3M, wie in Figur 10-7 dargestellt ist.

Die Figur 10-7 zeigt in drei Sequenzen - jeweils in einer oberen und einer unteren Abbildung - den rechten Sitz 2R, 3R in perspektivischen Darstellungen schräg von vorn.

In den beiden linken Abbildungen ist der rechte Sitz 2M, 3M noch nicht entriegelt. In den beiden mittleren Abbildungen ist der rechte Sitz 2M, 3M bereits entriegelt und wird angehoben. In den beiden rechten Abbildungen ist der rechte Sitz 2M, 3M aus dem Aufnahmeelement 72-1M, 73-1M herausgehoben, das heißt, die Adapterplatte A des rechten Sitzes 2M, 3M ist von dem Basissitz 2M, 3M getrennt. Die rechteckigen Bereiche der in den drei oberen Abbildungen dargestellten Pfeile werden in den Bildausschnitten der drei unteren Abbildungen wiedergegeben.

Zunächst wird auf das Aufnahmeelement 72-1M, 73-1M eingegangen. Dieses Aufnahmeelement ist als 90°-Winkel ausgebildet und ist mit seiner brillenartig dargestellten Seite in x-Richtung an dem Seitenteil des Basissitzes 2M, 3M befestigt. In dem davon abgehenden abgewinkelten Bereich ist jeweils ein oberer und unterer Aufnahmehaken 72-13, 73-13 angeordnet, in den die in x-Richtung verlaufenden bolzenartigen Befestigungselemente A1 eingreifen. In dem abgewinkelten Bereich ist zudem eine Öffnung 72-12, 73-12 angeordnet, in die das Verriegelungselement A2 eingreift. Die drei unteren Abbildungen zeigen nur das obere vordere Aufnahmeelement 72-1M, 73-1M. Im hinteren oberen Bereich liegt ein analog ausgeführtes Aufnahmeelement, wobei vorne und hinten im unteren Bereich ein Aufnahmeelement angeordnet ist, welches zumindest einen Aufnahmehaken aufweist. In der Ecke der beiden abgewinkelten Bereiche der beiden oberen Aufnahmeelemente 72-1M, 73-1M liegt eine Federelementaufnahme 72-11, 73-11, wobei der Aufnahmehaken 72-13, 73-13 mit einem Federelement in der Federelementaufnahme 72-11, 73-11 in Wirkverbindung steht. Diese Anordnung hat folgenden wesentlichen Vorteil.

Zunächst ist der Sitz gemäß den beiden linken Abbildungen noch verriegelt. Bei der Verriegelung des Sitzes 2R, 3R werden die bolzenartigen Befestigungselemente A1 in die Aufnahmehaken 72-13, 73-13 eingehängt. Anschließend wird der rechte Sitz 2R, 3R nach unten in z-Richtung gedrückt, wodurch das vordere und hintere Verriegelungselement A2 in die Öffnung 72-12, 73-12 einschnappt. Der rechte Sitz 2R, 3R ist an dem Basissitz 2M, 3M verriegelt. Bei dieser Bewegung in z-Richtung werden zumindest der vordere und hintere obere Aufnahmehaken 72-13, 73-13 nach unten bewegt und das Federelement wird in der Federelementaufnahme 72-11, 73-11 gespannt.

Diese Funktion wird in vorteilhafter Weise bei der Entriegelung des rechten Sitzes 2R, 3R ausgenutzt. In der Abbildung links unten ist ein Entriegelungselement E dargestellt, welches zur Entriegelung des rechten Sitzes 2R, 3R dient, und welches dafür sorgt, dass die Verriegelungselemente A2 aus den Öffnungen 72-12, 73-12 herausgeführt werden. Die Bewegungsrichtung des Entriegelungselementes E ist mit einem Pfeil dargestellt und erfolgt vorzugsweise in x-Richtung. Andere Bewegungsrichtungen sind ebenfalls denkbar. Nach der Freigabe, der Entriegelung des rechten Sitzes 2R, 3R sorgt die Spannkraft des Federelementes in der Federelementaufnahme 72-11, 73-11 dafür, dass zumindest die beiden oberen Aufnahmehaken 72-13, 73-13 den rechten Sitz 2R, 3R gegenüber dem Basissitz 2M, 3M in z-Richtung nach oben anheben. Für den Bediener ist wieder optisch sichtbar und auch spürbar, dass der rechte Sitz 2R, 3R entkoppelt ist und zur Abnahme vom Basissitz 2M, 3M bereitsteht. Die rechte untere Abbildung zeigt, dass die vorderen Befestigungselemente A1 und das vordere Entriegelungselement A2 aus den Aufnahmeelementen 72-1M, 73-1M herausgeführt sind.

Figur 11-1 zeigt ein weiteres Mal in einer perspektivischen Ansicht schräg von vorn zur Verdeutlichung eine dreisitzige Sitzbank S, die in der zweiten oder dritten Sitzreihe 2, 3 verbaubar ist. Figur 11-1 zeigt bereits, dass zwischen dem rechten Sitz 2R, 3R und dem Basissitz 2M, 3M ein Rahmen R angeordnet ist.

Die Entkopplung des linken Sitzes 2L, 3L ist in Figur 11-2 in einer linken Abbildung in einer perspektivischen Ansicht von rechts schräg von vorn dargestellt. Die beiden rechten Abbildungen helfen bei der Beschreibung. Die obere rechte Abbildung zeigt den Basissitz 2M, 3M und das linke Sitzteil 2L, 3L im Bereich ihrer Sitzteile 12M, 13M und 12L, 13L von vorn. Zwischen den beiden Sitzteilen 2L, 3L ist eine Gelenkanordnung G mit einem oberen und einem unteren Gelenk ausgeführt. Über die beiden Gelenke kann der dargestellte linke Seitensitz 2L, 3L scharnierartig auf einer z-Achse in y-Richtung verschwenkt werden. Im hinteren Bereich des linken Sitzes 2L, 3L ist eine in dieser oberen rechten Abbildung nicht sichtbare Haltevorrichtung mit einem Halteelement H1 angeordnet, das in eine Halteelementaufnahme H2 eingreift. Die Halteelementaufnahme H2 befindet sich am Seitenteil des Basissitzes 2M, 3M, der in der unteren rechten Abbildung schräg von hinten dargestellt ist, so dass die Halteelementaufnahme H2 sichtbar wird. Beim Verriegeln des linken Sitzes 2L, 3L greift das Halteelement H1 durch das Seitenteil des Basissitzes 2M, 3M in die Halteelementaufnahme H2 des Basissitzes 2M, 3M ein und fixiert den beispielhaft dargestellten Seitensitz 2L, 3L am mittleren Basissitz 2M, 3M. Die Haltevorrichtung H1, H2 kann von der Art sein, wie sie im Zusammenhang mit Easy-Entry-Funktion innerhalb der Beschreibung der Figur 10-4 erläutert worden ist.

Die Längsachse der Haltevorrichtung liegt dann jedoch in y-Richtung quer zur Fahrtrichtung x. Dadurch wird auch hier der Vorteil erzielt, dass nach einer Entriegelung des linken Sitzes 2L, 3L der linke Sitz 2L, 3L leicht weggedrückt wird, so dass für den Anwender sichtbar und spürbar ist, dass der linke Sitz 2L, 3L im hinteren Bereich entkoppelt ist und zur Entnahme bereitsteht. Über eine beispielsweise bolzenartige Einhängung ist der Rahmen R und damit der linke Sitz 2L, 3L über die an ihm angeordneten Augen von dem Bolzen der Gelenke in z-Richtung entnehmbar. Der Rahmen R weist zudem horizontal liegende Schienen, eine obere Schiene R1 und eine untere Schiene R2 auf. Die Sitzteilstruktur des linken Sitzes 2L, 3L ist so aufgebaut, dass der Sitz in der oberen und der unteren Schiene R1, R2, wie in Figur 1-3 dargestellt ist, in x-Richtung verschiebbar ist. Nachdem die Rückenlehne 22L, 23L gegenüber dem Sitzteil 12L, 13L heruntergeklappt worden ist, kann der linke Sitz 2L, 3L in x-Richtung in eine Easy-Entry-Klappstellung II verschoben werden. Insofern wird mit dieser zweiten Befestigungsvariante des Rahmens R über die Schienen R1, R2 in dem Rahmen R die gleiche Funktionalität wie bei der ersten Befestigungsvariante mit der Adapterplatte A und der Verschwenkbarkeit gegenüber dem Querrohr Q erreicht.

Hinsichtlich der Materialauswahl wird wie zur Figur 9-2 beschrieben analog vorgegangen. Der wesentliche Unterschied besteht jedoch darin, dass nicht die Adapterplatte A aus einem Stahlwerkstoff hergestellt ist, sondern dass die Gelenkanordnung G und der Rahmen R und die Schienen R1, R2 aus dem Stahlwerkstoff bestehen. Auch die Verriegelung in der Haltevorrichtung H1, H2 und die angrenzenden Bauteile, wie beispielsweise der Querträger des Basissitzes 2M, 3M, der die Halteelementaufnahme H2 bildet, ist aus einem Stahlwerkstoff hergestellt.

Eine Basisversion mit frei schwebenden, seitlichen Sitzteilen 2R, 3R, 2L, 3L für eine dreisitzige Sitzbank S in der zweiten oder dritten Sitzreihe 2, 3 kann wie in Figur 13 so ausgebildet sein, dass jeweils zum Basissitz 2M, 3M gerichtet modulartige Verschraubungen M vorgesehen sind. Für Fahrzeuge 100, bei denen nur selten ein Ausbau der Seitensitze notwendig ist, bietet sich diese preiswertere dritte Befestigungsvariante an. Die modulartigen Verschraubungen M sind in Figur 12 dargestellt.

Alternativ kann vorgesehen sein, dass die zweite oder dritte Sitzreihe 2, 3 oder eben die erste Sitzreihe 1 mit einem Einzelsitz 2R, 3R und einer Doppelsitzbank D ausgeführt werden. Diese Doppelsitzbank D weist in dem Verbindungsbereich zu dem Einzelsitz 2R, 3R, der in der Figur 14 rechts angeordnet ist, aber selbstverständlich auch links angeordnet werden kann, die gleichen Merkmale wie der Basissitz 2M, 3M auf. Es versteht sich, dass die Anbindungspunkte nicht wie in Figur 2 auf dem Fahrzeugboden 102 angeordnet werden können, sondern entsprechend dieser Konzeption angeordnet werden müssen.

Aber auch dieses Alternativkonzept ermöglicht die Bereitstellung von sechs Sitzplätzen in der zweiten oder dritten Sitzreihe 2, 3 mit nur vier beziehungsweise acht Anbindungspunkten 103 im Fahrzeugboden 102.

Unter Berücksichtigung der ersten Reihe für Fahrer und Beifahrer ergeben sich zusammen mit der ersten und zweiten dahinterliegenden Sitzreihe (insgesamt n=3) maximal neun Sitzplätze, wofür nur zwölf Anbindungspunkte 103 auf dem Fahrzeugboden 102 vorgehalten werden müssen.

Bei den Langversionen von einigen Fahrzeugen sind sogar neben der Reihe für den Fahrer und Beifahrer weitere drei Sitzreihen insgesamt vier (n=4) Sitzreihen angeordnet. Bei einer maximalen Anzahl von jeweils drei Sitzen ist das Fahrzeug somit mit zwölf Sitzen ausgestattet, wofür im Fahrzeugboden 102 oder in den karosserieseitigen Schienen nur sechzehn Anbindungspunkte 103 benötigt werden.

Bei einer Ausstattung mit zwei Einzelsitzen in der ersten Sitzreihe 1 ergeben sich eine Vielzahl von Sitzanordnungen, je nachdem welcher der Einzelsitze 2L, 2M, 2R, 3L, 3M, 3R (ohne Berücksichtigung des Alternativkonzeptes, Figur 14) im Fahrzeuginnenraum angeordnet ist. Es versteht sich, dass bei der erfindungsgemäßen Lösung kein linker oder rechter Sitz alleine im Fahrzeuginnenraum angeordnet werden kann.

Die Abbildungen zeigen die verschiedenen möglichen Sitzanordnungen, die anhand der Bezugszeichenliste nachvollzogen werden können.

### Bezugszeichenliste

- S: Sitzbank
- D: Doppelsitzbank
- 1: erste Sitzreihe
- 2: zweite Sitzreihe
- 2L: linker Sitz, zweite Sitzreihe
- 2M: mittlerer Sitz, zweite Sitzreihe
- 2R: rechter Sitz, zweite Sitzreihe
- _2...: Komponenten und Bauteile zweite Sitzreihe
- 12L: Sitzteil, linker Sitz
- 12M: Sitzteil, mittlerer Sitz
- 12R: Sitzteil, rechter Sitz
- 22L: Rückenlehne, linker Sitz
- 22M: Rückenlehne, mittlerer Sitz
- 22R: Rückenlehne, rechter Sitz
- 32M: sitzteilseitiger Beschlag, mittlerer Sitz
- 42M: rückenlehnenseitiger Beschlag, mittlerer Sitz
- 52M: Sitzfüße, mittlerer Sitz
- 62M: Rückenlehnenanbindung
- 72M: Verstärkungsstruktur
- 72-1M: Aufnahmeelement
- 72-11: Federelementaufnahme
- 72-12: Öffnung
- 72-13: Aufnahmehaken
- 3: dritte Sitzreihe
- 3L: linker Sitz, dritte Sitzreihe
- 3M: mittlerer Sitz, dritte Sitzreihe
- 3R: rechter Sitz, dritte Sitzreihe
- _3...: Komponenten und Bauteile, dritte Sitzreihe
- 13L: Sitzteil, linker Sitz
- 13M: Sitzteil, mittlerer Sitz
- 13R: Sitzteil, rechter Sitz
- 23L: Rückenlehne, linker Sitz
- 23M: Rückenlehne, mittlerer Sitz
- 23R: Rückenlehne, rechter Sitz
- 33M: sitzteilseitiger Beschlag, mittlerer Sitz
- 43M: rückenlehnenseitiger Beschlag, mittlerer Sitz
- 53M: Sitzfüße, mittlerer Sitz
- 63M: Rückenlehnenanbindung
- 73M: Verstärkungsstruktur
- 73-1M: Aufnahmeelement
- 73-11: Federelementaufnahme
- 73-12: Öffnung
- 73-13: Aufnahmehaken
- 100: Fahrzeug
- 101: Fahrzeugkarosserie
- 102: Fahrzeugboden
- 103: Anbindungspunkte
- 104L: linke Seitentür
- 104R: rechte Seitentür
- 105: Hecktür
- 106: Transportgegenstand
- 107: ISOFIX-Anbindung
- 108: Top-Tether-Anbindung
- I: Wickelstellung
- II: Easy-Entry-Klappstellung
- A: Adapterplatte
- A1: Befestigungselement
- A2: Verriegelungselement
- A3: Steg
- B: Beschlag
- E: Entriegelungselement
- F1: Fixierungselement
- F2: Fixierungselementaufnahme
- G: Gelenkanordnung
- H1: Halteelement
- H2: Haltelementaufnahme
- M: Schraubmodule
- Q: Querrohr
- Q1: Querrohraufnahme
- R: Rahmen
- R1: obere Schiene
- R2: untere Schiene
- x: x-Richtung
- y: y-Richtung
- z: z-Richtung
- n_{S}: Anzahl der Sitzreihen (n_{S}=1, 2, 3 bis...)
- n_{A}: Anzahl der Anbindungspunkte

## Patentansprüche

1. Sitzbank (S) für ein Fahrzeug, die drei Sitze (2L, 2M, 2R; 3L, 3M, 3R) umfasst, die nebeneinander angeordnet und miteinander verbunden sind, wobei einer der drei Sitze (2L, 2M, 2R; 3L, 3M, 3R) als Basissitz (2M, 3M) fungiert, während die anderen Sitze (2L, 2R; 3L, 3R) über einem Fahrzeugboden (102) einer Fahrzeugkarosserie (101) schweben, da die anderen Sitze (2L, 2R; 3L, 3R) ausschließlich mit dem Basissitz (2M, 3M) reversibel in Verbindung (72-1M, 73-1M, A; G, R; M) stehen, wobei die Sitzbank (S) an einem Fahrzeugboden (102) einer Fahrzeugkarosserie des Fahrzeuges anordbar ist, wobei zur Anbindung der Sitzbank (S) mit bis zu drei Sitzplätzen in einer Sitzreihe maximal vier karosserieseitige Anbindungspunkte (103) vorgesehen sind, **dadurch gekennzeichnet, dass** über die Anbindungspunkte (103) gemeinsam mit Verriegelungseinheiten (52M, 53M) des Basissitzes (2M, 3M) der Sitzbank (S) für eine reversible Anbindung der Sitzbank (S) an dem Fahrzeugboden (102) gesorgt ist und dass neben dem Basissitz (2M, 3M) zur Bildung einer zweisitzigen Sitzbank (S) der eine der anderen Sitze (2L, 2R; 3L, 3R) und zur Bildung einer dreisitzigen Sitzbank (S) die beiden anderen Sitze (2L, 2R; 3L, 3R) angeordnet und mit ihm schwebend verbunden sind.

2. Sitzbank nach Anspruch 1, **dadurch gekennzeichnet, dass** die Verbindung zwischen dem Basissitz (2M, 3M) mit einem der beiden anderen Sitze (2L, 2R; 3L, 3R) erfolgt, indem der Basissitz (2M, 3M) über mindestens ein Aufnahmeelement (72-1M, 73-1M) verfügt, in dem eine Adapterplatte (A) des einen der beiden anderen Sitze (2L, 2R; 3L, 3R) befestigbar ist.

3. Sitzbank nach Anspruch 1, **dadurch gekennzeichnet, dass** die Verbindung zwischen dem Basissitz (2M, 3M) mit inem der beiden anderen Sitze (2L, 2R; 3L, 3R) erfolgt, indem der Basissitz (2M, 3M) über mindestens eine Gelenkanordnung (G) verfügt, an der mindestens ein Rahmen (R) des einen der beiden anderen Sitze (2L, 2R; 3L, 3R) befestigbar ist.

4. Sitzbank nach Anspruch 1, **dadurch gekennzeichnet, dass** die Verbindung zwischen dem Basissitz (2M, 3M) mit einem der beiden anderen Sitze (2L, 2R; 3L, 3R) erfolgt, indem zwischen dem Basissitz (2M, 3M) und einem der beiden anderen Sitze (2L, 2R; 3L, 3R) ein Schraubmodul (M) angeordnet ist.

5. Sitzbank nach Anspruch 1, **dadurch gekennzeichnet, dass** der Basissitz (2M, 3M) allein oder der Basissitz (2M, 3M) und mindestens einer der beiden anderen Sitze (2L, 2R; 3L, 3R) der zweisitzigen Sitzbank (S) oder der dreisitzigen Sitzbank (S) in eine Wickelstellung (I) bringbar ist.

6. Sitzbank (S) nach Anspruch 2 oder 3, **dadurch gekennzeichnet, dass** mindestens einer der anderen Sitze (2L, 2R; 3L, 3R) der zweisitzigen Sitzbank (S) oder der dreisitzigen Sitzbank (S) gegenüber dem Basissitz (2M, 3M) in eine Easy-Entry-Klappstellung (II) bringbar ist.

7. Sitzanordnung einer Sitzbank (S) nach einem der Ansprüche 1 bis 6 an einer Fahrzeugkarosserie (101, 102) eines Fahrzeuges, **dadurch gekennzeichnet, dass** der Fahrzeugboden (102) zur Anbindung der Sitzbank (S) mit bis zu drei Sitzplätzen in einer Sitzreihe (2, 3) maximal vier karosserieseitige Anbindungspunkte (103) aufweist, wobei über die Anbindungspunkte (103) oder Anbindungsschienen gemeinsam mit den Verriegelungseinheiten (52M, 53M) eines Basissitzes (2M, 3M) der Sitzbank (S) für die reversible Anbindung der Sitzbank (S) an dem Fahrzeugboden (102) gesorgt ist.

8. Sitzanordnung nach Anspruch 7, **dadurch gekennzeichnet, dass** der mindestens eine ausschließlich mit dem Basissitz (2M, 3M) verbundene andere Sitz (2L, 2R; 3L, 3R) schwebend über dem Fahrzeugboden (102) angeordnet ist.

9. Fahrzeug (100) mit einer Sitzanordnung nach Anspruch 7.

## Claims

1. Seat bench (S) for a vehicle, which comprises three seats (2L, 2M, 2R; 3L, 3M, 3R) which are arranged next to one another and are connected to one another, wherein one of the three seats (2L, 2M, 2R; 3L, 3M, 3R) acts as a base seat (2M, 3M), while the other seats (2L, 2R; 3L 3R) float above a vehicle floor (102) of a vehicle body (101) since the other seats (2L, 2R; 3L, 3R) are reversibly connected (72-1M, 73-1M, A; G, R, M) exclusively to the base seat (2M, 3M), wherein the seat bench (S) can be arranged on a vehicle floor (102) of a vehicle body of the vehicle, wherein, in order to connect the seat bench (S) with up to three seats in a row of seats, a maximum of four body-side connection points (103) are provided, **characterized in that** a reversible connection of the seat bench (S) to the vehicle floor (102) is provided via the connection points (103) together with locking units (52M, 53M) of the base seat (2M, 3M) of the seat bench (S), and **in that**, in order to form a two-seater seat bench (S), one of the other seats (2L, 2R; 3L, 3R) is arranged next to the base seat (2M, 3M), and in order to form a three-seater seat bench (S), the two other seats (2L, 2R; 3L, 3R) are arranged next to the base seat (2M, 3M), and are connected thereto in a floating manner.

2. Seat bench according to Claim 1, **characterized in that** the connection between the base seat (2M, 3M) to one of the two other seats (2L, 2R; 3L, 3R) takes place by the base seat (2M, 3M) having at least one receiving element (72-1M, 73-1M) in which an adapter plate (A) of one of the two other seats (2L, 2R; 3L, 3R) can be fastened.

3. Seat bench according to Claim 1, **characterized in that** the connection between the base seat (2M, 3M) to one of the two other seats (2L, 2R; 3L, 3R) takes place by the base seat (2M, 3M) having at least one joint arrangement (G) to which at least one frame (R) of one of the two other seats (2L, 2R; 3L, 3R) can be fastened.

4. Seat bench according to Claim 1, **characterized in that** the connection between the base seat (2M, 3M) to one of the two other seats (2L, 2R; 3L, 3R) takes place by a screw module (M) being arranged between the base seat (2M, 3M) and one of the two other seats (2L, 2R; 3L, 3R).

5. Seat bench according to Claim 1, **characterized in that** the base seat (2M, 3M) by itself or the base seat (2M, 3M) and at least one of the two other seats (2L, 2R; 3L, 3R) of the two-seater seat bench (S) or of the three-seater seat bench (S) can be brought into a wrapping position (I).

6. Seat bench (S) according to Claim 2 or 3, **characterized in that** at least one of the other seats (2L, 2R; 3L, 3R) of the two-seater seat bench (S) or of the three-seater seat bench (S) can be brought into an easy-entry folding position (II) in relation to the base seat (2M, 3M).

7. Seat arrangement of a seat bench (S) according to one of Claims 1 to 6 on a vehicle body (101, 102) of a vehicle, **characterized in that**, for the connection of the seat bench (S) with up to three seats in a row of seats (2, 3), the vehicle floor (102) has a maximum of four body-side connection points (103), wherein the reversible connection of the seat bench (S) to the vehicle floor (102) is provided via the connection points (103) or connection rails together with the locking units (52M, 53M) of a base seat (2M, 3M) of the seat bench (S) .

8. Seat arrangement according to Claim 7, **characterized in that** the at least one other seat (2L, 2R; 3L, 3R) which is connected exclusively to the base seat (2M, 3M) is arranged in a floating manner above the vehicle floor (102).

9. Vehicle (100) with a seat arrangement according to Claim 7.

## Revendications

1. Banquette (S) pour véhicules, qui comprend trois sièges (2L, 2M, 2R ; 3L, 3M, 3R) qui sont disposés les uns près des autres et sont connectés entre eux, un des trois sièges (2L, 2M, 2R ; 3L, 3M, 3R) faisant office de siège de base (2M, 3M) tandis que les autres sièges (2L, 2R ; 3L, 3R) oscillent au-dessus d'un sol de véhicule (102) d'une carrosserie de véhicule (101) car les autres sièges (2L, 2R ; 3L, 3R) sont exclusivement en liaison (72-1M, 73-1M, A ; G, R ; M) de manière réversible avec le siège de base (2M, 3M), la banquette (S) pouvant être disposée au niveau d'un sol de véhicule (102) d'une carrosserie de véhicule du véhicule, sachant que, pour connecter la banquette (S) comportant jusqu'à trois places assises dans une rangée de sièges, au maximum quatre points de raccordement (103) sont prévus au niveau de la carrosserie, **caractérisée en ce que**, grâce aux points de raccordement (103) conjointement avec des unités de verrouillage (52M, 53M) du siège de base (2M, 3M) de la banquette (S), un raccordement réversible de la banquette (S) au sol du véhicule (102) est assuré et que, près du siège de base (2M, 3M), pour constituer une banquette à deux sièges (S), l'un des autres sièges (2L, 2R ; 3L, 3R) est disposé et raccordé à celui-ci de manière oscillante et, pour constituer une banquette à trois sièges (S), il en est de même pour les deux autres sièges (2L, 2R ; 3L, 3R).

2. Banquette selon la revendication 1, **caractérisée en ce que** la connexion entre le siège de base (2M, 3M) et un des autres sièges (2L, 2R ; 3L, 3R) est réalisée par le fait que le siège de base (2M, 3M) dispose d'au moins un élément récepteur (72-1M, 73-1M) dans lequel une plaque d'adaptation (A) de l'un des deux autres sièges (2L, 2R ; 3L, 3R) peut être fixée.

3. Banquette selon la revendication 1, **caractérisée en ce que** la connexion entre le siège de base (2M, 3M) et un des autres sièges (2L, 2R ; 3L, 3R) est réalisée par le fait que le siège de base (2M, 3M) dispose d'au moins un dispositif d'articulation (G) auquel au moins un cadre (R) d'un des deux autres sièges (2L, 2R ; 3L, 3R) peut être fixé.

4. Banquette selon la revendication 1, **caractérisée en ce que** la connexion entre le siège de base (2M, 3M) et un des autres sièges (2L, 2R ; 3L, 3R) est réalisée par le fait qu'un module à vis (M) est disposé entre le siège de base (2M, 3M) et un des autres sièges (2L, 2R ; 3L, 3R).

5. Banquette selon la revendication 1, **caractérisée en ce que** le siège de base (2M, 3M) seul ou le siège de base (2M, 3M) et au moins un des autres sièges (2L, 2R ; 3L, 3R) de la banquette à deux sièges (S) ou de la banquette à trois sièges (S) peut être amené dans une position d'enroulement (I) .

6. Banquette (S) selon la revendication 2 ou 3, **caractérisée en ce qu'**au moins un des autres sièges (2L, 2R ; 3L, 3R) de la banquette à deux sièges (S) ou de la banquette à trois sièges (S) peut être amené dans une position rabattue à entrée facile (II) par rapport au siège de base (2M, 3M).

7. Système de sièges d'une banquette (S) selon une des revendications 1 à 6 au niveau d'une carrosserie de véhicule (101, 102) d'un véhicule, **caractérisé en ce que** le sol du véhicule (102) présente, pour connecter la banquette (S) comportant jusqu'à trois places assises en une rangée de sièges (2, 3), au maximum quatre points de raccordement (103) au niveau de la carrosserie, sachant que, grâce aux points de raccordement (103) ou à des rails de raccordement en commun avec les unités de verrouillage (52M, 53M) d'un siège de base (2M, 3M) de la banquette (S), un raccordement réversible de la banquette (S) au sol du véhicule (102) est assuré.

8. Système de sièges selon la revendication 7, **caractérisé en ce que** l'au moins un autre siège (2L, 2R ; 3L, 3R) raccordé vivement au siège de base (2M, 3M) est disposé en oscillation au-dessus du sol du véhicule (102).

9. Véhicule (100) comportant un système de sièges selon la revendication 7.
